(19) Europäisches Patentamt / European Patent Office / Office européen des brevets

(11) **EP 3 677 320 A1**

(12) **EUROPEAN PATENT APPLICATION**
published in accordance with Art. 153(4) EPC

(43) Date of publication:
**08.07.2020  Bulletin 2020/28**

(51) Int Cl.:
***A63B 69/00*** (2006.01)

(21) Application number: **17923853.0**

(22) Date of filing: **01.09.2017**

(86) International application number:
**PCT/JP2017/031672**

(87) International publication number:
**WO 2019/043928 (07.03.2019 Gazette 2019/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Fujitsu Limited
Kawasaki-shi, Kanagawa 211-8588 (JP)**

(72) Inventors:
- **KUBOTA, Kazumi
  Kawasaki-shi
  Kanagawa 211-8588 (JP)**
- **NAITO, Hirohisa
  Kawasaki-shi
  Kanagawa 211-8588 (JP)**

(74) Representative: **Hoffmann Eitle
Patent- und Rechtsanwälte PartmbB
Arabellastraße 30
81925 München (DE)**

(54) **PRACTICE SUPPORT PROGRAM, PRACTICE SUPPORT METHOD AND PRACTICE SUPPORT SYSTEM**

(57)     A practice assist device (100) specifies a plurality of first frames respectively representing a plurality of scenes constituting a first skill from first sensing data measured during a performance of the first skill. The practice assist device (100) specifies a plurality of second frames respectively representing the scenes constituting the first skill from second sensing data measured during another performance of the first skill. The practice assist device (100) displays, for at least one of the scenes, the first frames and the second frames in association with each other.

FIG.5

## Description

Technical Field

The present invention relates to a practice assist program and the like.

Background Art

In gymnastics, men compete on six events of floor exercise, pommel horse, still rings, vault, parallel bars, and horizontal bar and women compete on four events of vault, uneven bars, balance beam, and floor exercise. Both men and women successively perform a plurality of skills to make one performance.

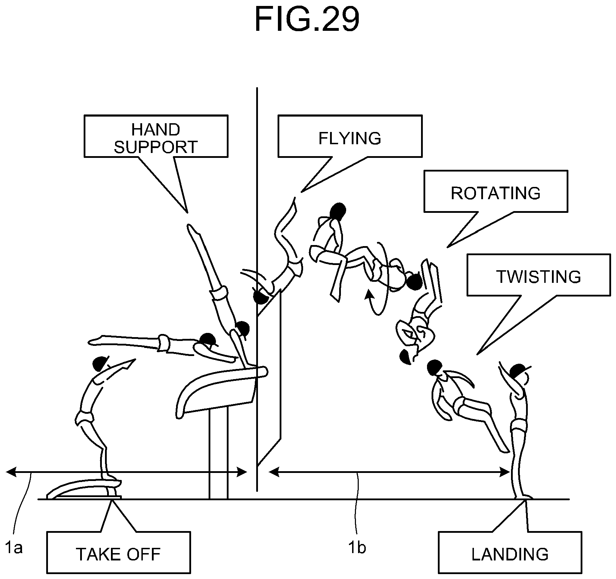

Performance in gymnastics includes a plurality of scenes constituting a skill. FIG. 29 is a diagram for describing an example of scenes constituting a skill. FIG. 29 illustrates an example of scenes constituting a skill "triple-twisting Yurchenko layout". For example, the skill "triple-twisting Yurchenko layout" includes a phase 1a and a phase 1b. The phase 1a includes a scene "take off" and "hand support". The phase 1b includes "flighting", "rotating", "twisting", and "landing".

The score of performance is calculated by a total of D (difficulty) score and E (execution) score. The D-score is a score calculated depending on the difficulty of a skill constituting the performance. The E-score is a score calculated by a point deduction system related to the technique of performance and the posture of the body in each scene of a skill. For example, in the example illustrated in FIG. 29, at the timing of the scene "hand support", when the body of the player is not straight, the E-score is deducted.

The purpose of practice of performance is to eliminate the difference between a skill performed by his/herself and a skill indicated in the table of difficulty. To achieve the goal, for example, players shoot their performances by a video camera and compare video of a failed skill and video of a successful skill, and get advices from a coach and repeat practice.

Citation List

Patent Literature

Patent Literature 1: Japanese Laid-open Patent Publication No. 2017-038407
Patent Literature 2: Japanese Laid-open Patent Publication No. 2010-264088

Summary

Technical Problem

The above-mentioned conventional technology, however, has a problem in that postures corresponding to a plurality of scenes to be compared are not displayed in a comparative manner.

For example, in a complicated skill (performance) in which a single skill is composed of a plurality of scenes such as gymnastics, it is effective to compare the postures of players corresponding to each scene about the same skills separately performed. However, the body of a player performing a skill has three-dimensional complicated motion, and hence even when referring to video shot by a camera from one direction, it is difficult to grasp the three-dimensional motion, which is not reflected to practice. Even when the same player performs the same skill a plurality of times and refers to video of each skill, the scenes are not synchronized among videos, and hence it is difficult to compare the postures of players corresponding to each scene.

In one aspect, the present invention has an object to provide a practice assist program, a practice assist method, and a practice assist system capable of displaying postures corresponding to a plurality of scenes to be compared in a comparative manner.

Solution to Problem

According to an aspect of the embodiment of the invention, a practice assist program for causing a computer to execute processing for: specifying, from first sensing data measured during a performance of a first skill, a plurality of first frames respectively representing a plurality of scenes constituting the first skill; specifying, from second sensing data measured during another performance of the first skill, a plurality of second frames respectively representing the scenes constituting the first skill; and displaying, for at least one of the scenes, the first frames and the second frames in association with each other.

Advantageous Effects of Invention

Postures corresponding to a plurality of scenes can be displayed in a comparable manner.

Brief Description of Drawings

FIG. 1 is a diagram illustrating an example of a practice assist system according to a first example.
FIG. 2 is a diagram for describing sensing data.
FIG. 3 is a diagram for describing video data.
FIG. 4 is a diagram (1) illustrating an example of a display screen displayed by a practice assist device according to the first example.
FIG. 5 is a functional block diagram illustrating a configuration of a practice assist device according to the first example.
FIG. 6 is a diagram illustrating an example of a data structure of a sensing DB according to the first example.
FIG. 7 is a diagram illustrating an example of a data structure of a skill recognition DB according to the first example.
FIG. 8 is a diagram illustrating an example of a data structure of a video DB according to the first example.
FIG. 9 is a diagram illustrating an example of joint definition data according to the first example.
FIG. 10 is a diagram illustrating an example of a data structure of a joint position DB according to the first example.
FIG. 11 is a diagram illustrating an example of a data structure of a 3D model DB according to the first example.
FIG. 12 is a diagram illustrating an example of an additional display location selection screen according to the first example.
FIG. 13 is a diagram (2) illustrating an example of the display screen displayed by the practice assist device according to the first example.
FIG. 14 is a diagram (3) illustrating an example of the display screen displayed by the practice assist device according to the first example.
FIG. 15 is a diagram (4) illustrating an example of the display screen displayed by the practice assist device according to the first example.
FIG. 16 is a diagram (5) illustrating an example of the display screen displayed by the practice assist device according to the first example.
FIG. 17 is a flowchart (1) illustrating a processing procedure of the practice assist device according to the first example.
FIG. 18 is a flowchart (2) illustrating a processing procedure of the practice assist device according to the first example.
FIG. 19 is a flowchart (3) illustrating a processing procedure of the practice assist device according to the first example.
FIG. 20 is a diagram illustrating an example of a practice assist system according to a second example.
FIG. 21 is a diagram illustrating an example of a display screen displayed by a practice assist device according to the second example.
FIG. 22 is a functional block diagram illustrating a configuration of the practice assist device according to the second example.
FIG. 23 is a flowchart illustrating a processing procedure of the practice assist device according to the second example.
FIG. 24 is a diagram illustrating an example of a practice assist system according to a Third example.
FIG. 25 is a diagram illustrating an example of a display screen displayed by the practice assist device according to the third example.
FIG. 26 is a functional block diagram illustrating a configuration of the practice assist device according to the third example.
FIG. 27 is a flowchart illustrating a processing procedure of the practice assist device according to the third example.
FIG. 28 is a diagram illustrating an example of a hardware configuration of a computer for implementing the same functions as in the practice assist device.
FIG. 29 is a diagram for describing an example of a plurality of scenes constituting a skill.

Description of Embodiments

Examples of a practice assist program, a practice assist method, and a practice assist system disclosed herein are described in detail below with reference to the drawings. The present invention is not limited by the examples.

First Example

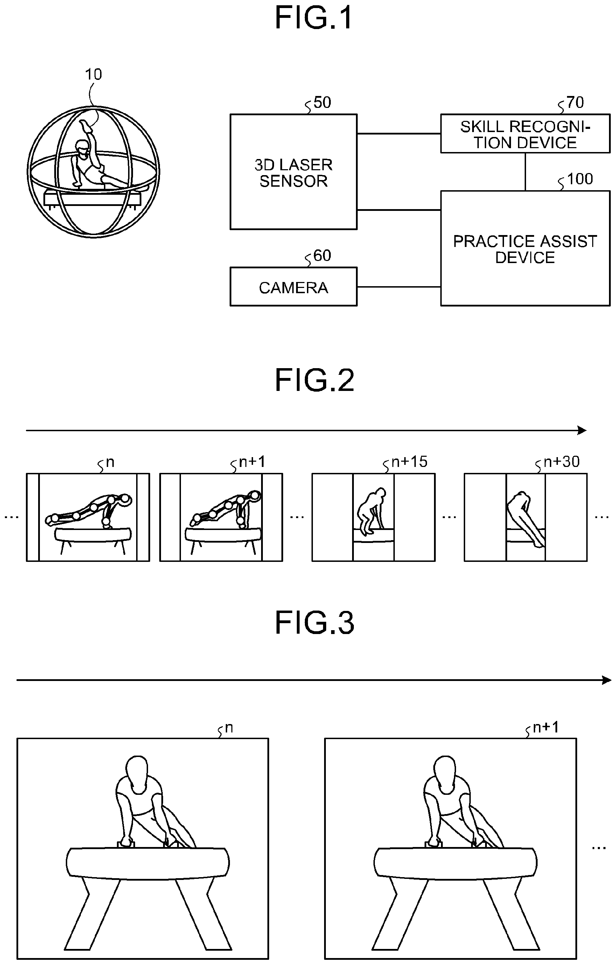

FIG. 1 is a diagram illustrating an example of a practice assist system according to a first example. As illustrated in FIG. 1, the practice assist system includes a three-dimensional (3D) laser sensor 50, a camera 60, a skill recognition device 70, and a practice assist device 100. The practice assist device 100 is connected to the 3D laser sensor 50, the camera 60, and the skill recognition device 70.

In the first example, an example where a player 10 performs a first skill and then performs the first skill again is described. The player 10 is an example of a performer. The performance for the first time is referred to as "first performance", and the performance for the second time is referred to as "second performance". Regarding the first performance and the second performance, the player 10 performs performances of the same "first skill". In the first example, the case where the player 10 performs gymnastics performance is described as an example, but the same can be applied to other rating competitions.

Examples of the other rating competitions include trampolining, diving in swimming, figure skating, Kata in Karate, social dancing, snowboarding, skateboarding, ski aerial, and surfing. The present invention may be applied to, for example, checking of the form in classical ballet, ski jumping, air and turns in mogul skiing, baseball, and basketball. The present invention may be applied to competitions such as Kendo, Judo, wrestling, and Sumo.

The 3D laser sensor 50 is a sensor for performing 3D sensing on the player 10. The 3D laser sensor 50 outputs sensing data as sensing results to the skill recognition device 70 and the practice assist device 100. The 3D laser sensor 50 is an example of a distance image sensor capable of measuring a distance to the player 10.

FIG. 2 is a diagram for describing sensing data. The sensing data includes a plurality of frames, and the frames are given frame numbers for uniquely identifying the frames in an ascending order. The sensing data illustrated in FIG. 2 indicates frames having frame numbers n, n+1, ..., n+15, ..., n+30 in the order from older frames. n corresponds to a natural number. For example, each frame includes distance information from the 3D laser sensor 50 to each point on the player 10. The use of the sensing data can estimate the three-dimensional position of each joint of the player 10 in each frame to generate a 3D model of the player 10.

When the frame rate of sensing by the 3D laser sensor 50 is 30 frames per second (fps), the time interval from a frame with a frame number n to a frame with a frame number n+1 is 0.33 seconds. In the sensing data, a frame corresponding to a frame between frames can be generated by interpolation based on preceding and subsequent frames. For example, an n+0.5-th frame can be generated by interpolating a frame having the frame number n and a frame having the frame number n+1.

The camera 60 is a device for taking video data on the player 10. The camera 60 outputs the video data to the practice assist device 100. The video data includes a plurality of frames corresponding to an image of the player 10, and each frame is allocated with a frame number. FIG. 3 is a diagram for describing the video data. The video data illustrated in FIG. 3 indicates frames having frame numbers n, n+1, ... in the order from older frames. The frame numbers in the video data and the frame numbers in the sensing data are synchronized with each other. In the following description, the frames included in the sensing data are referred to as "sensing frames" and the frames in the video data are referred to as "video frames" as appropriate.

The skill recognition device 70 is a device for recognizing phases of a skill and scenes constituting the skill based on sensing data sensed by the 3D laser sensor 50. The skill recognition device 70 generates recognition result data in which each frame number of the sensing data is associated with each recognition result. The skill recognition device 70 outputs the recognition result data to the practice assist device 100. The phase is a unit that sections a skill for descriptive purposes, and a scene is a unit of motion constituting a skill. The phase is composed of a plurality of scenes. Depending on events and competitions, the phase is not set, and only the scene indicating a unit of motion is set.

For example, the skill recognition device 70 compares a skill recognition table (not illustrated) that defines features of skills with sensing data to recognize phases of skills and scenes constituting the skills that correspond to each sensing frame. The skill recognition device 70 may use another technology to recognize phases of skills and scenes constituting the skills that correspond to each sensing frame.

The practice assist device 100 specifies a plurality of first sensing frames corresponding to a plurality of scenes constituting a first skill from sensing data in a first performance. The practice assist device 100 specifies a plurality of second sensing frames corresponding to the plurality of scenes constituting the first skill from sensing data in a second performance. The practice assist device 100 displays, for each of the scenes, the first sensing frames and the second sensing frames in association with each other in chronological order.

The practice assist device 100 estimates joint positions and skeleton positions of the player 10 based on the sensing data, and generates 3D model data on the player 10. The practice assist device 100 displays three-dimensional models corresponding to first sensing frames and three-dimensional models corresponding to second sensing frames in association with each other.

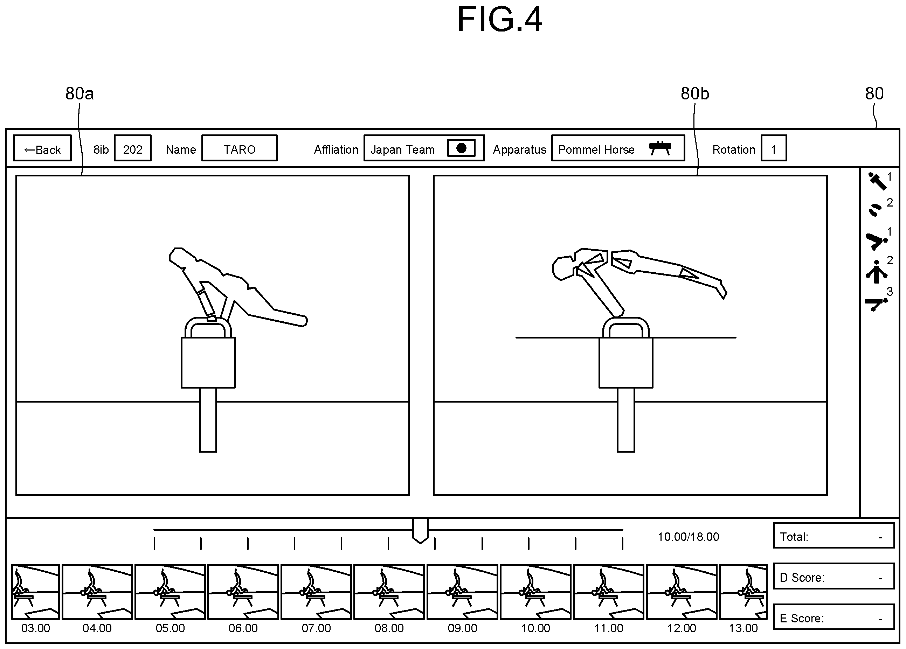

FIG. 4 is a diagram (1) illustrating an example of a display screen displayed by the practice assist device according to the first example. As illustrated in FIG. 4, a display screen 80 includes a display region 80a and a display region 80b. For example, the first skill includes a first scene, a second scene, an m-th scene, and an (m+n)-th scene. In the display region 80a, a 3D model of a first sensing frame corresponding to the m-th scene is displayed. In the display region 80b, a 3D model of a second sensing frame corresponding to the m-th scene is displayed. In other words, the practice assist device 100 displays the scene of the skill corresponding to the 3D model displayed in the display region 80a and the scene of the skill of the 3D model displayed in the display region 80b in synchronization with each other.

The practice assist device 100 displays the display screen 80 as illustrated in FIG. 4, so that the postures of the player 10 corresponding to a plurality of scenes to be compared can be displayed in a comparative manner.

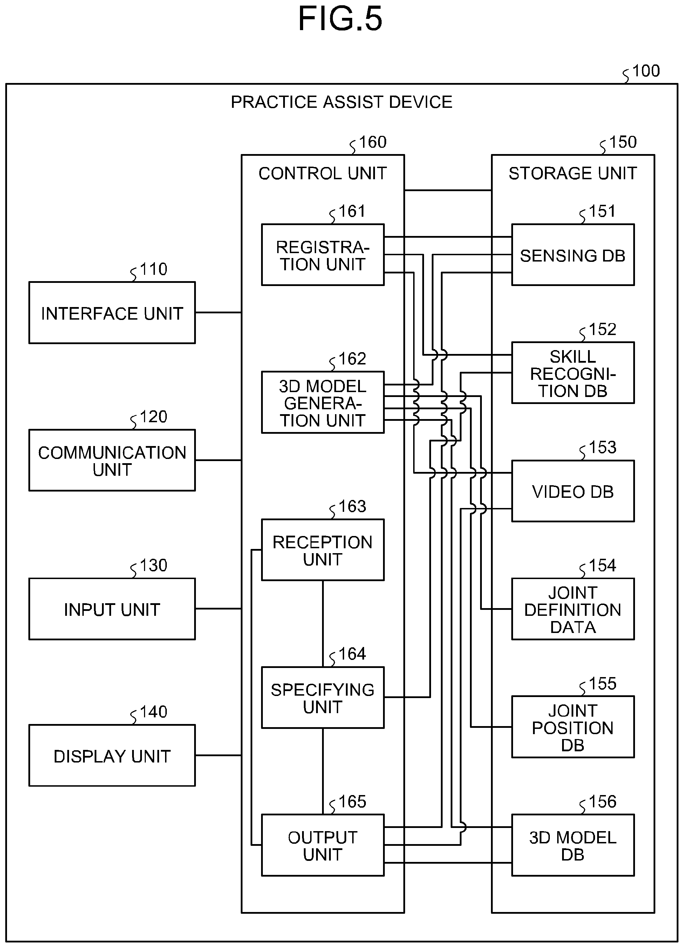

Subsequently, an example of the configuration of the practice assist device 100 illustrated in FIG. 1 is described. FIG. 5 is a functional block diagram illustrating the configuration of the practice assist device according to the first example. As illustrated in FIG. 5, the practice assist device 100 includes an interface unit 110, a communication unit 120, an input unit 130, a display unit 140, a storage unit 150, and a control unit 160. The display unit 140 and an output unit 165 are examples of a display unit.

The interface unit 110 is a device connected to the 3D laser sensor 50, the camera 60, and the skill recognition device 70 to acquire data from the 3D laser sensor 50, the camera 60, and the skill recognition device 70. The interface unit 110 outputs the acquired data to the control unit 160. For example, the interface unit 110 acquires sensing data from the 3D laser sensor 50. The interface unit 110 acquires video data from the camera 60. The interface unit 110 acquires recognition result data from the skill recognition device 70.

The communication unit 120 is a device for communicating data to other devices through a network. The communication unit 120 corresponds to a communication device. The practice assist device 100 may be connected to the 3D laser sensor 50, the camera 60, and the skill recognition device 70 through the network. In this case, the communication unit 120 acquires data from the 3D laser sensor 50, the camera 60, and the skill recognition device 70 through the network.

The input unit 130 is an input device for inputting various kinds of information to the practice assist device 100. The input unit 130 corresponds to a keyboard, a mouse, or a touch panel, for example. For example, a user operates the input unit 130 to designate sensing data in a first performance and sensing data in a second performance. The user operates the input unit 130 to designate a scene to be referred to among a plurality of scenes constituting a skill. The user may be a player 10, or may be another user such as a coach.

The display unit 140 is a display device for displaying information on a display screen output from the control unit 160. For example, the display unit 140 displays the display screen 80 described above with reference to FIG. 4. The display unit 140 corresponds to a liquid crystal display or a touch panel, for example.

The storage unit 150 has a sensing database (DB) 151, a skill recognition DB 152, a video DB 153, joint definition data 154, a joint position DB 155, and a 3D model DB 156. The storage unit 150 corresponds to a storage device such as a semiconductor memory element represented by a random access memory (RAM), a read only memory (ROM), and a flash memory, and a hard disk drive (HDD).

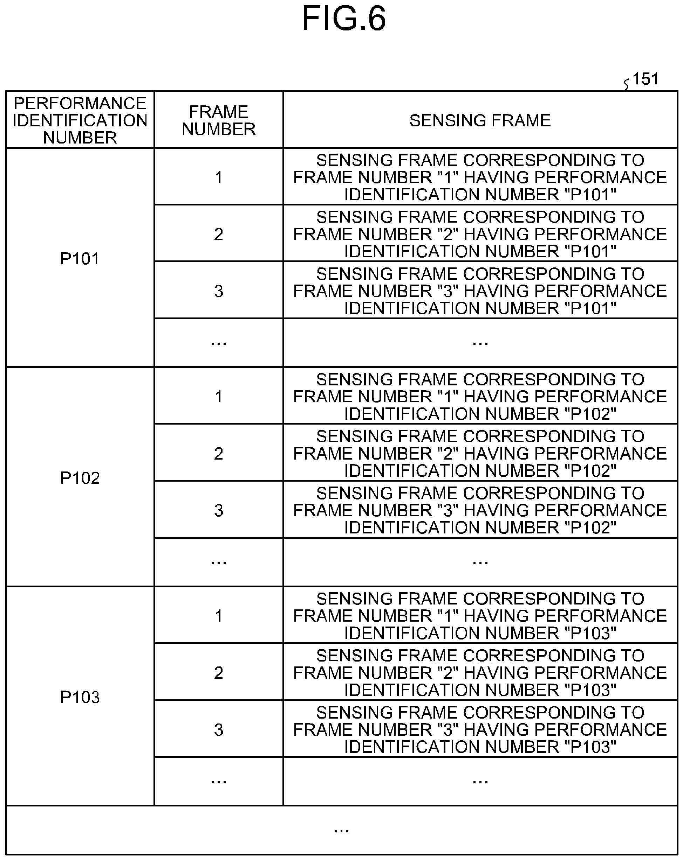

The sensing DB 151 is a database for storing therein sensing data from the 3D laser sensor 50. FIG. 6 is a diagram illustrating an example of the data structure of the sensing DB according to the first example. As illustrated in FIG. 6, the sensing DB 151 associates a performance identification number, a frame number, and a sensing frame with one another. The performance identification number is a number for uniquely identifying a performance performed separately. Even the same performance is given a different performance identification number when a timing of being sensed by the 3D laser sensor 50 is different. For example, a first performance and a second performance are allocated with different performance identification numbers.

In FIG. 6, the frame number is a number for uniquely identifying each sensing frame corresponding to the same performance identification number. The sensing frame is a sensing frame sensed by the 3D laser sensor 50.

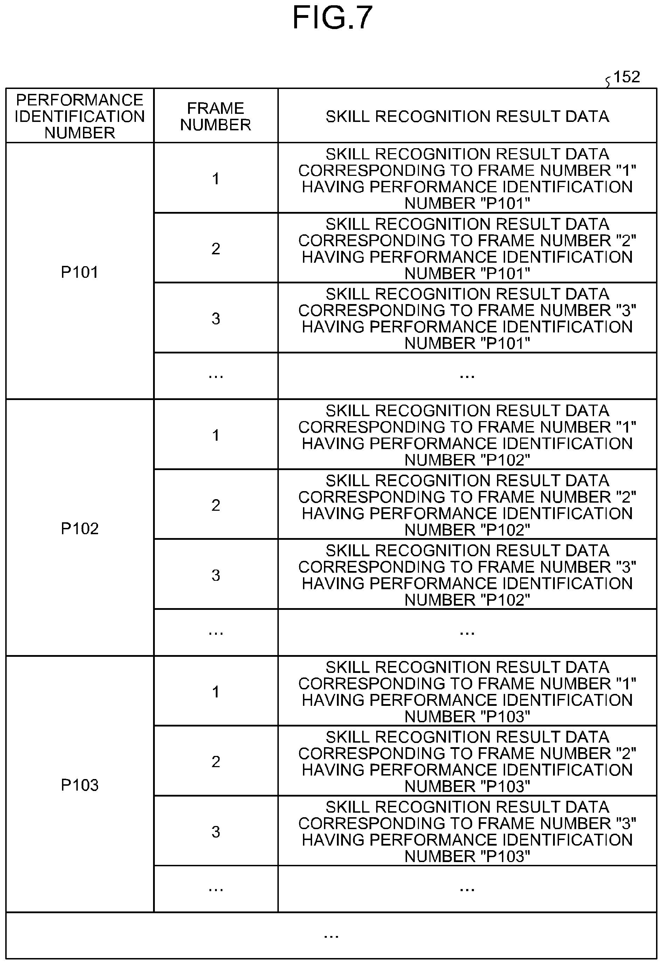

The skill recognition DB 152 is a database for storing therein recognition result data acquired from the skill recognition device 70. FIG. 7 is a diagram illustrating an example of the data structure of the skill recognition DB according to the first example. As illustrated in FIG. 7, the skill recognition DB 152 associates a performance identification number, a frame number, and skill recognition result data with one another. The description on the performance identification number is the same as the description for the sensing DB 151.

In FIG. 7, the frame number is a number for uniquely identifying each sensing frame corresponding to the same performance identification number. For example, in regard to frame numbers corresponding to the same performance identification number, the frame number in FIG. 7 and the frame number in FIG. 6 are synchronized with each other.

In FIG. 7, the skill recognition result data is information indicating a recognition result of a sensing frame recognized by the skill recognition device 70. Aspects of a skill and scenes of the skill are included in the skill recognition result data. For example, when a sensing frame corresponding to the frame number "2" with the performance identification number "P101" is a frame of the scene "take off" described above with reference to FIG. 29, "phase=phase 1a, scene=take off" is stored in skill recognition result data corresponding to the frame number "2" with the performance identification number "P101".

In the first example, in the skill recognition result data, a scene representing a skill among scenes constituting the skill is set as an example. For example, when the frame is a frame corresponding to "scene A" constituting the skill, "scene=scene A" is stored in the skill recognition result data. On the other hand, when the frame is not a frame corresponding to a scene constituting the skill, "scene=NULL" is stored in the skill recognition result data.

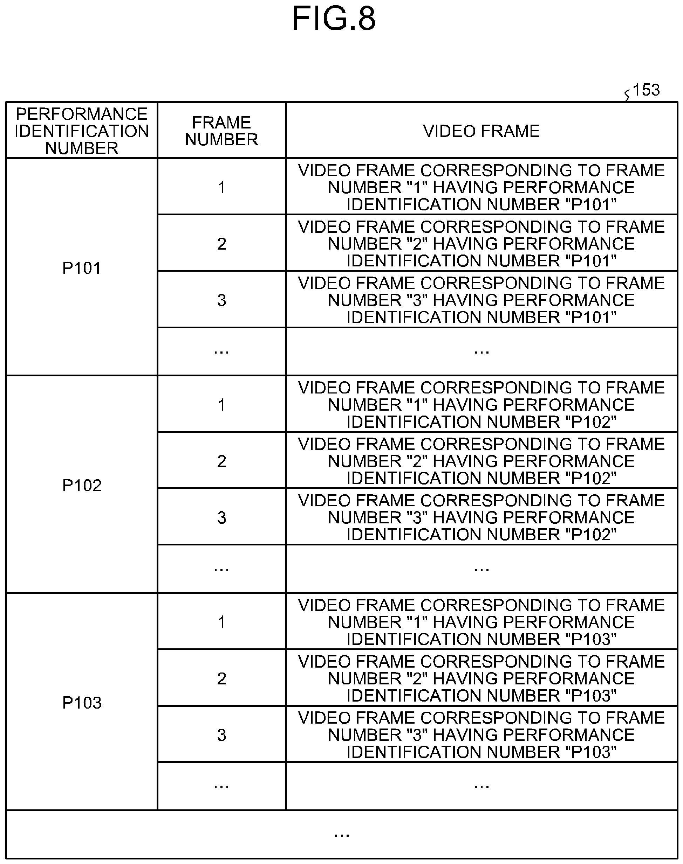

The video DB 153 is a database for storing therein video data acquired from the camera 60. FIG. 8 is a diagram illustrating an example of the data structure of the video DB according to the first example. As illustrated in FIG. 8, the video DB 153 associates a performance identification number, a frame number, and a video frame with one another. The description on the performance identification number is the same as that for the sensing DB 151.

In FIG. 8, the frame number is a number for uniquely identifying each video frame corresponding to the same performance identification number. The frame number of a video frame is synchronized with the frame number of a sensing frame. The video frame is a video frame taken by the camera 60.

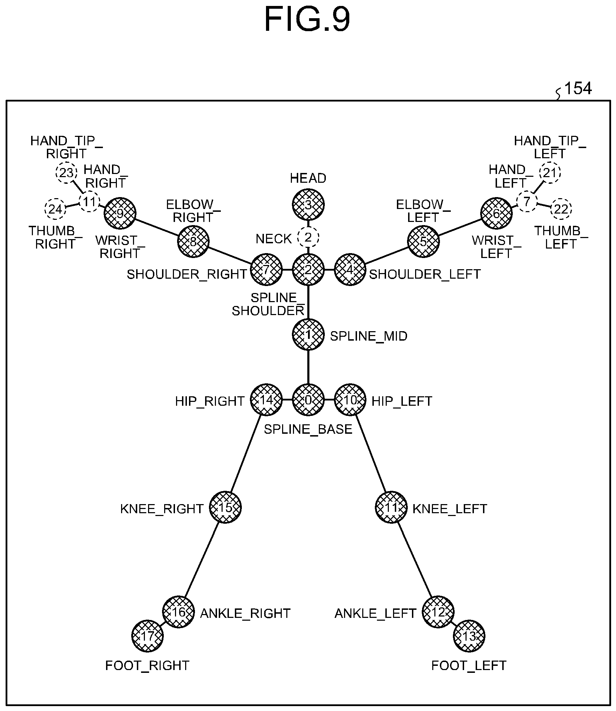

The joint definition data 154 defines each joint position of a performer (player 10). FIG. 9 is a diagram illustrating an example of the joint definition data according to the first example. As illustrated in FIG. 9, the joint definition data 154 stores therein information in which joints specified by a publicly known skeleton model are numbered. For example, as illustrated in FIG. 9, a right shoulder joint (SHOULDER_RIGHT) is given 7, a left elbow joint (ELBOW_LEFT) is given 5, a left knee joint (KNEE_LEFT) is given 11, and a right hip joint (HIP_RIGHT) is given 14. In the first example, the X coordinate, the Y coordinate, and the Z coordinate of the right shoulder joint 8 are sometimes referred to as "X8", "Y8", and "Z8", respectively. Dotted numerals are joints and the like that are specified from the skeleton model but not used for rating.

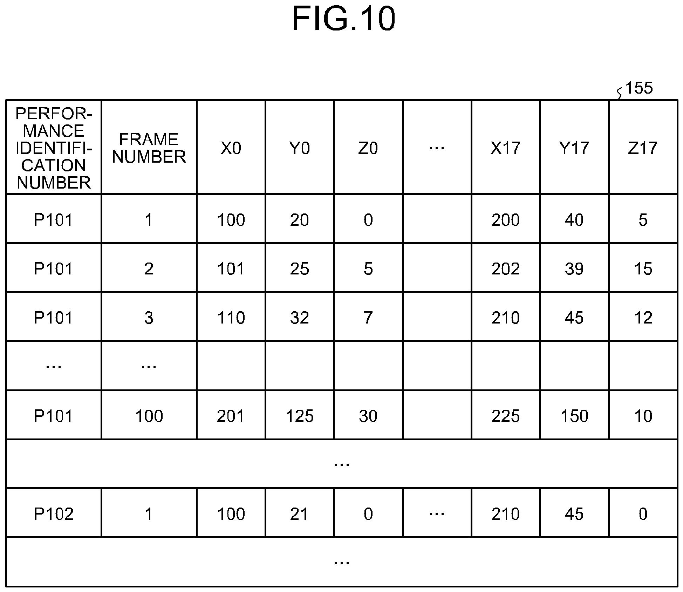

The joint position data 154 is position data on each joint of the player 10 generated based on the sensing data of the 3D laser sensor 50. FIG. 10 is a diagram illustrating an example of the data structure of the joint position DB according to the first example. As illustrated in FIG. 10, the joint position DB 155 associates a performance identification number, a frame number, and "X0, Y0, Z0, ..., X17, Y17, and Z17" with one another. The description on the performance identification number is the same as that for the sensing DB 151.

In FIG. 10, the frame number is a number for uniquely identifying each sensing frame corresponding to the same performance identification number. The frame number illustrated in FIG. 10 and the frame number illustrated in FIG. 6 are synchronized with each other. "X0, Y0, Z0, ..., X17, Y17, and Z17" are XYZ coordinates of the joints. For example, "X0, Y0, and Z0" are three-dimensional coordinates of the joint with the number 0 illustrated in FIG. 9.

FIG. 10 indicates a chronological change in each joint in sensing data having a performance identification number "P101", and a frame number "1" indicates that the positions of joints are "X0=100, Y0=20, Z0=0, ..., X17=200, Y17=40, Z17=5". A frame number "2" indicates that the positions of joints have moved to "X0=101, Y0=25, Z0=5, ..., X17=202, Y17=39, Z17=15".

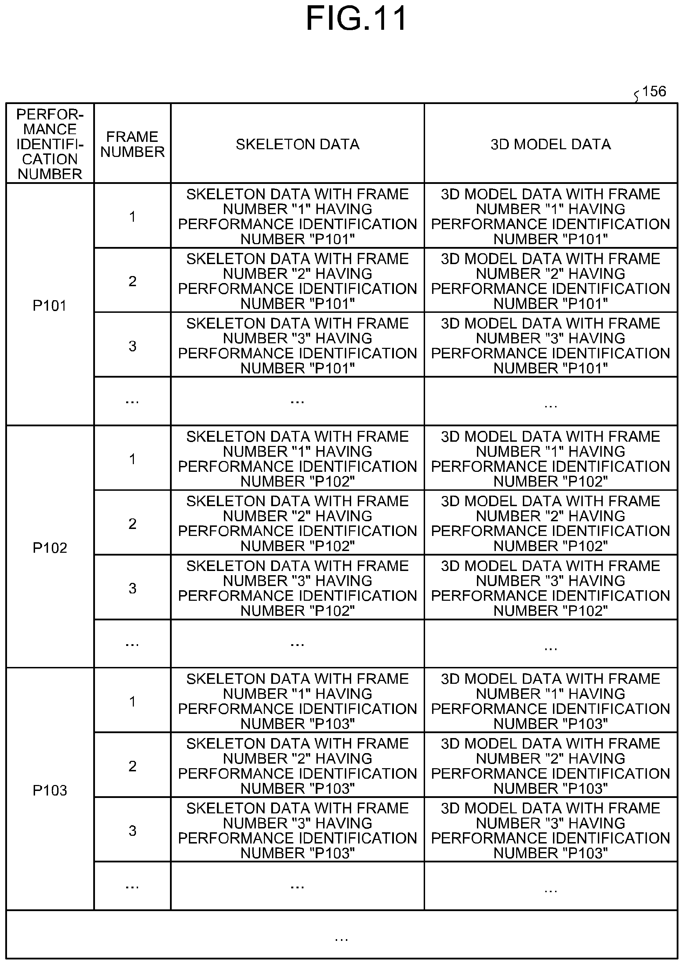

The 3D model DB 156 is a database for storing therein information on a 3D model of the player 10 generated based on sensing data. FIG. 11 is a diagram illustrating an example of the data structure of the 3D model DB according to the first example. As illustrated in FIG. 11, the 3D model DB 156 associates a performance identification number, a frame number, skeleton data, and 3D model data with one another. The descriptions on the performance identification number and the frame number are the same as those for the sensing DB 151.

The skeleton data is data indicating a skeleton of the player 10 estimated by connecting joint positions. The 3D model data is data on a 3D model of the player 10 estimated based on information obtained from the sensing data and the skeleton data.

Referring back to FIG. 5, the control unit 160 includes a registration unit 161, a 3D model generation unit 162, a reception unit 163, a specifying unit 164, and an output unit 165. The control unit 160 can be implemented by a central processing unit (CPU) or a micro processing unit (MPU). The control unit 160 can also be implemented by hardware wired logic such as an application specific integrated circuit (ASIC) and a field programmable gate array (FPGA).

The registration unit 161 acquires sensing data from the 3D laser sensor 50, and registers the acquired sensing data in the sensing DB 151. The registration unit 161 registers the sensing data (frame number, sensing frame) in the sensing DB 151 in association with a performance identification number. The performance identification number is designated by a user through the input unit 130 and the like.

The registration unit 161 acquires recognition result data from the skill recognition device 70, and registers the acquired recognition result data in the skill recognition DB 152. The registration unit 161 registers the skill recognition result data (frame number, skill recognition result data) in the skill recognition DB 152 in association with a performance identification number. The performance identification number is designated by the user through the input unit 130 and the like.

The registration unit 161 acquires video data from the camera 60, and registers the acquired video data in the video DB 153. The registration unit 161 registers the video data (frame number, video frame) in the video DB 153 in association with a performance identification number. The performance identification number is designated by the user through the input unit 130 and the like.

The 3D model generation unit 162 is a processing unit for generating 3D model data corresponding to each frame number having each performance identification number based on the sensing DB 151. In the following, an example of processing of the 3D model generation unit 162 is described. The 3D model generation unit 162 compares sensing frames in the sensing DB 151 with the positional relation of joints defined in the joint definition data 154 to specify the types of joints included in the sensing frames and three-dimensional coordinates of the joints. The 3D model generation unit 162 repeatedly executes the above-mentioned processing for each frame number having each performance identification number to generate the joint position DB 155.

The 3D model generation unit 162 connects the three-dimensional coordinates of the joints stored in the joint position DB 155 based on the connection relation defined in the joint definition data 154 to generate skeleton data. The 3D model generation unit 162 fits the estimated skeleton data to a skeleton model adjusted to the physical size of the player 10 to generate 3D model data. The 3D model generation unit 162 repeatedly executes the above-mentioned processing for each frame number having each performance identification number to generate the 3D model DB 156.

The reception unit 163 is a processing unit for receiving, from the input unit 130 and the like, two types of performance identification numbers corresponding to two performances to be compared by the user. The reception unit 163 outputs information on the received two types of performance identification numbers to the specifying unit 164. For example, two performances to be compared by the user are referred to as "first performance" and "second performance". The performance identification number corresponding to the first performance is referred to as "first performance identification number", and the performance identification number corresponding to the second performance is referred to as "second performance identification number".

For example, the relation between the first performance and the second performance corresponds to a performance before coaching and a performance after coaching. Alternatively, the relation between the first performance and the second performance corresponds to a failed performance and a successful performance. Alternatively, the relation between the first performance and the second performance may be simply a performance in the past and the latest performance. Performers (players 10) of the first performance and the second performance may be the same person or different persons.

Furthermore, the reception unit 163 receives information on additional display locations. The information on additional display locations includes information for identifying a scene in a skill and a plurality of joints that are desired by a user. The reception unit 163 outputs information on the additional display locations to the output unit 165.

For example, the reception unit 163 displays an additional display location selection screen for selecting an additional display location on the display unit 140, and receives information on the additional display location.

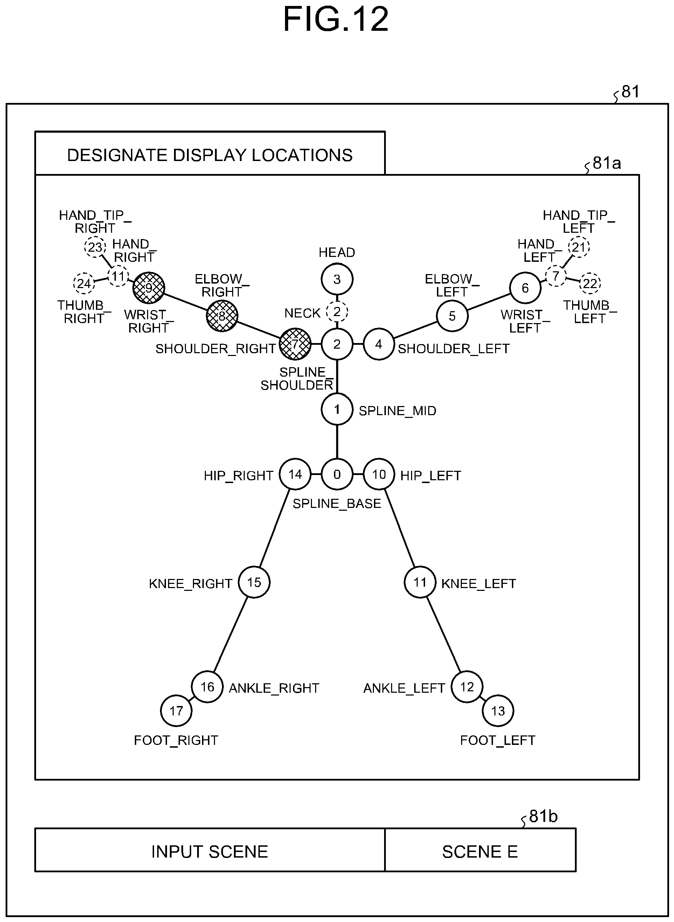

FIG. 12 is a diagram illustrating an example of the additional display location selection screen according to the first example. In the example illustrated in FIG. 12, an additional display location selection screen 81 has a selection form 81a for selecting joints as display locations, and an input form 81b for inputting a scene. The user operates the input unit 130 to input information on additional display locations. In the example illustrated in FIG. 12, joints 7, 8, and 9 are selected as additional display locations, and a scene E is input. In the selection of a scene, a skill may be designated and a specific scene E may be selected from among scenes constituting the designated skill.

The reception unit 163 receives, from the input unit 130 and the like, information on the position and direction of a virtual line-of-sight when referring to the 3D model. In the following description, the information on the position and direction of the virtual line-of-sight is referred to as "virtual line-of-sight data". The reception unit 163 outputs the virtual line-of-sight data to the output unit 165.

The specifying unit 164 acquires the first performance identification number and the second performance identification number from the reception unit 163. For example, the specifying unit 164 refers to the skill recognition DB 152 for skill recognition result data having each frame number corresponding to the first performance identification number, and specifies frame numbers (hereinafter referred to as "first frame numbers") respectively representing a plurality of scenes constituting a skill in the first performance. The specifying unit 164 outputs the first performance identification number and the specified first frame numbers to the output unit 165. When the number of frames constituting a scene is single, the frame is a frame representing the scene. On the other hand, when the number of frames constituting a scene is plural, a predetermined frame is a frame representing the scene. Examples of the predetermined frame include the first frame, a middle frame, and the last frame among a plurality of frames constituting a scene.

The specifying unit 164 refers to the skill recognition DB 152 for skill recognition result data having each frame number corresponding to the second performance identification number, and specifies frame numbers (hereinafter referred to as "second frame numbers") respectively representing the scenes constituting the skill in the second performance. The specifying unit 164 outputs the second performance identification number and the specified second frame numbers to the output unit 165.

In the following description, a plurality of sensing frames corresponding to the first frame numbers having the first performance identification number are referred to as a plurality of "first sensing frames". A plurality of sensing frames corresponding to the second frame numbers having the second performance identification number are referred to as a plurality of "second sensing frames".

The output unit 165 is a processing unit for displaying, for each of a plurality of scenes, the first sensing frames and the second sensing frames in association with each other in chronological order on the display unit 140. Examples of processing 1 to 5 by the output unit 165 are described below.

"Processing 1" executed by the output unit 165 is described. The processing 1 by the output unit 165 is processing for generating information on the display screen 80 described above with reference to FIG. 4 and outputting the generated information to the display unit 140. For example, scenes constituting a first performance and a second performance include "scene A, scene B, scene C, ...".

The output unit 165 uses a frame number of a first sensing frame corresponding to the scene A among a plurality of first sensing frames as a key to detect corresponding first 3D model data from the 3D model DB 156. The output unit 165 generates an image of the first 3D model data seen from a virtual line-of-sight with reference to virtual line-of-sight data, and places the image in the display region 80a.

The output unit 165 uses a frame number of a second sensing frame corresponding to the scene A among a plurality of second sensing frames as a key to detect corresponding second 3D model data from the 3D model DB 156. The output unit 165 generates an image of the second 3D model data seen from the virtual line-of-sight with reference to the virtual line-of-sight data, and places the image in the display region 80b.

The output unit 165 repeats the above-mentioned processing for the other scenes "scene B, scene C, ...", so that first 3D model data corresponding to "scene B, scene C, ..." is displayed in the display region 80a. In the display region 80b, second 3D model data corresponding to "scene B, scene C, ..." is displayed. The output unit 165 synchronizes the scene in the first 3D model data displayed in the display region 80a and the scene in the second 3D model data displayed in the display region 80b.

The practice assist device 100 displays the display screen 80 as illustrated in FIG. 4, so that the postures of the player 10 corresponding to scenes to be compared can be displayed in a comparative manner.

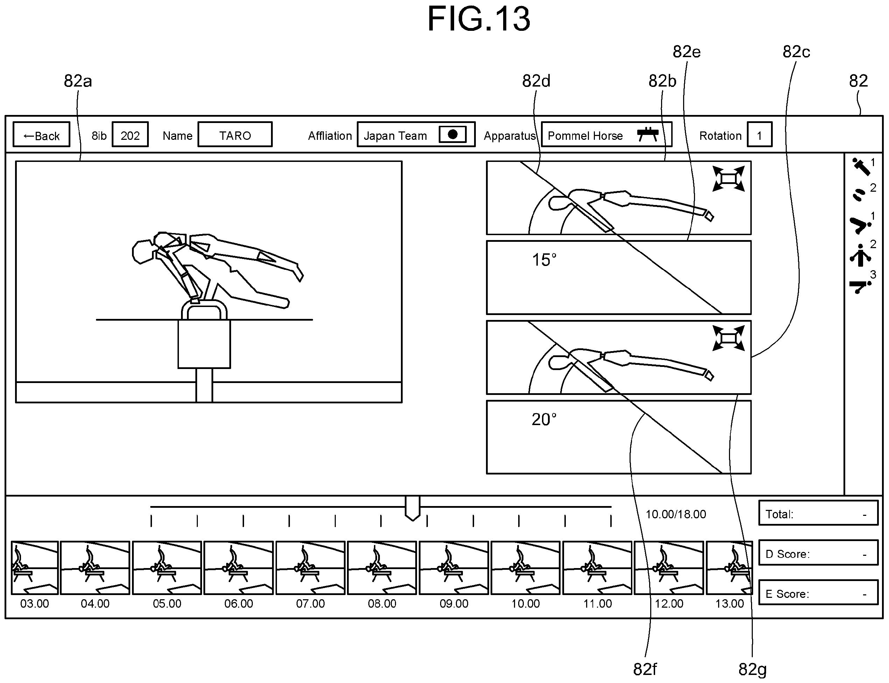

"Processing 2" executed by the output unit 165 is described. The processing 2 executed by the output unit 165 is processing for generating information on a display screen 82 illustrated in FIG. 13 and outputting the generated information to the display unit 140. FIG. 13 is a diagram (2) illustrating an example of the display screen displayed by the practice assist device according to the first example.

Similarly to the processing 1, the output unit 165 generates an image of first 3D model data and an image of second 3D model data. The output unit 165 displays the image of the first model data and the image of the second 3D model data in a display region 82a in a superimposed manner. The scene in the first 3D model data and the scene in the second 3D model data displayed in the display region 82a are the same. In other words, first 3D model data and second 3D model data corresponding to a scene in a phase are displayed in the display region 82a in a superimposed manner.

In the output unit 165, virtual line-of-sight data (hereinafter referred to as "set line-of-sight data") from which the posture of the player 10 is easily grasped is set in advance for each scene. The output unit 165 generates images in display regions 82b and 82c based on set line-of-sight data corresponding to a scene in the first 3D model data and the second 3D model data currently displayed in the display region 82a.

The output unit 165 generates an image of the first 3D model data seen from a virtual line-of-sight with reference to the set line-of-sight data, and sets the image in the display region 82b. The output unit 165 may additionally display an angle between a straight line 82d passing through a predetermined joint in the 3D model data and a horizontal line 82e.

The output unit 165 generates an image of the second 3D model data seen from the virtual line-of-sight with reference to the set line-of-sight data, and sets the image in the display region 82c. The output unit 165 may additionally display an angle between a straight line 82f passing through a predetermined joint in the 3D model data and a horizontal line 82g.

The practice assist device 100 displays the display screen 82 as illustrated in FIG. 13, so that the postures of the player 10 corresponding to scenes to be compared can be displayed in a comparative manner. Video of 3D models related to a first performance and a second performance seen from virtual lines-of-sight can be simultaneously referred to for each scene.

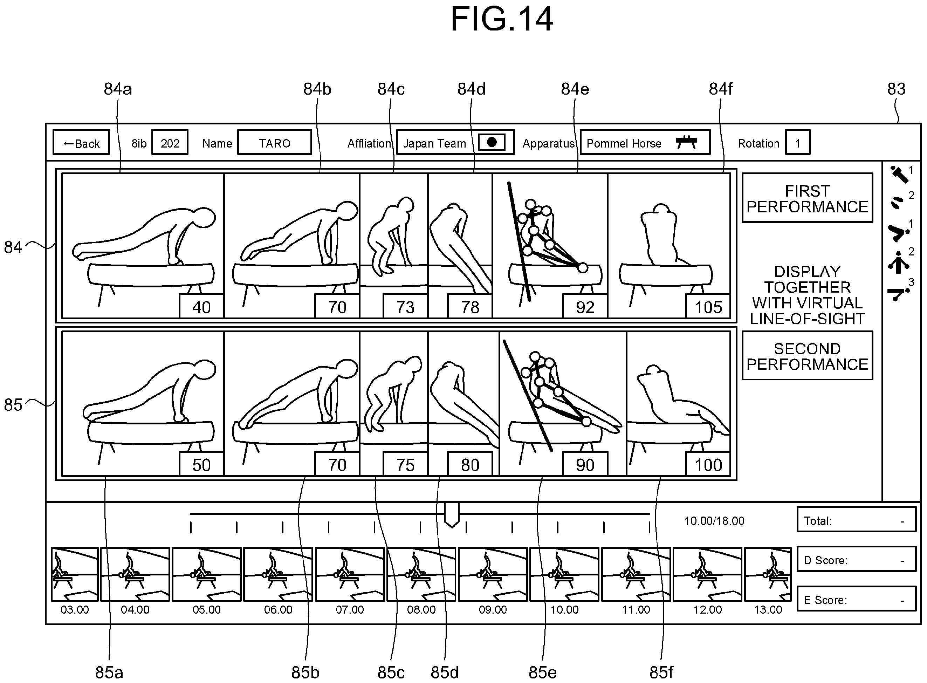

"Processing 3" executed by the output unit 165 is described. The processing 3 executed by the output unit 165 is processing for generating information on a display screen 83 illustrated in FIG. 14 and outputting the generated information to the display unit 140. FIG. 14 is a diagram (3) illustrating an example of the display screen displayed by the practice assist device according to the first example.

Similarly to the processing 1, the output unit 165 specifies each piece of first 3D model data corresponding to each scene and each piece of second 3D model data corresponding to each scene. For example, the output unit 165 generates images 84a to 84f of first 3D model data of scenes A to F seen from a virtual line-of-sight with reference to virtual line-of-sight data, and places the images in a display region 84 in chronological order. Numerals indicated by the images 84a to 84f indicate frame numbers. For example, the frame number of the image 84a corresponding to the scene A is "40".

The output unit 165 generates images 85a to 85f of second 3D model data of the scenes A to F seen from the virtual line-of-sight with reference to the virtual line-of-sight data, and places the images in a display region 85 in chronological order. Numerals indicated by the images 85a to 85f indicate frame numbers. For example, the frame number of the image 85a corresponding to the scene A is "50".

When the output unit 165 arranges the images 84a to 84f in the display region 84 and arranges the images 85a to 85f in the display region 85, the output unit 165 arranges the images such that scenes of the upper and lower images are the same.

The practice assist device 100 displays the display screen 83 as illustrated in FIG. 14, so that the postures of the player 10 corresponding to scenes to be compared can be displayed in chronological order in a comparative manner. By displaying the frame numbers, a user can grasp a time taken between a scene and a subsequent scene in a first performance and a time taken between a scene and a subsequent scene in a second performance. For example, the user can grasp that a time taken for shifting from a scene to a subsequent scene in a second performance is shorter or longer than that in a first performance, and can practice while being aware of speed of the performance.

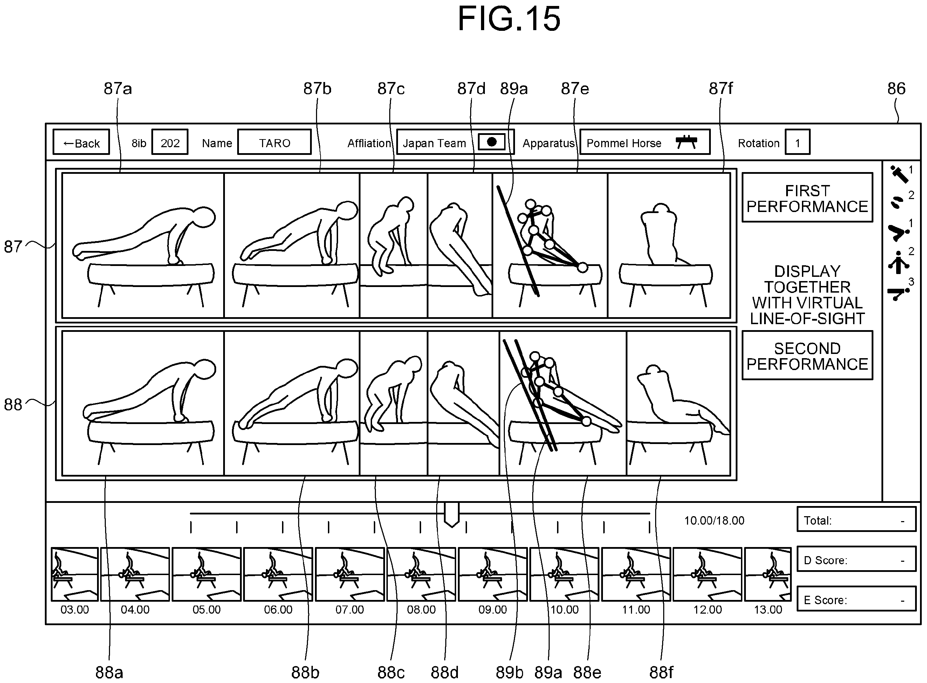

"Processing 4" executed by the output unit 165 is described. The processing 4 executed by the output unit 165 is processing for generating information on a display screen 86 illustrated in FIG. 15 and outputting the generated information to the display unit 140. FIG. 15 is a diagram (4) illustrating an example of the display screen displayed by the practice assist device according to the first example.

Similarly to the processing 3, the output unit 165 generates images 87a to 87f of first 3D model data of scenes A to F seen from a virtual line-of-sight with reference to virtual line-of-sight data, and places the images in a display region 87 in chronological order. The output unit 165 generates images 88a to 88f of first 3D model data of the scenes A to F seen from the virtual line-of-sight with reference to the virtual line-of-sight data, and places the images in a display region 88 in chronological order.

The output unit 165 acquires information on additional display locations from the reception unit 163. For the sake of description, the information on additional display locations includes the joints 7, 8, and 9 and the scene E. The output unit 165 specifies the positions of the joints 7, 8, and 9 based on the frame number of a first sensing frame corresponding to the scene E among a plurality of first sensing frame and based on the joint position DB 155. The output unit 165 displays a line segment 89a passing through the joint positions 7, 8, and 9 on an image 87e corresponding to the scene E.

The output unit 165 specifies the positions of the joints 7, 8, and 9 based on the frame number of a second sensing frame corresponding to the scene E among a plurality of second sensing frames and based on the joint position DB 155. The output unit 165 displays a line segment 89b passing through the joint positions 7, 8, and 9 on an image 88e corresponding to the scene E. The output unit 165 may display the line segment 89a and the line segment 89b on the image 88e in a superimposed manner.

The practice assist device 100 displays the display screen 86 as illustrated in FIG. 15 on the display unit 140, so that a change (degree of improvement) in joint position related to an additional display location can be easily grasped. For example, when coached by a coach "Take care of the angle of the wrist", it is effective to arrange performances (for example, first performance and second performance) before and after coaching side by side from the line of sight from which the angle of the wrist is easily viewed. Thus, by designating joints near a wrist (for example, joints 7, 8, and 9) as joint positions related to additional display locations and designating virtual line-of-sight data, the user can easily compare performances before and after coaching from an easy-to-view direction in regard to the area near the wrist.

When coached by a coach "Spread the hip to the toe", it is effective to arrange performances before and after coaching side by side from the line of sight from which the hip to the toe are easily viewed. Thus, by designating joints related to the area from a hip to a toe (for example, joints 14, 15, 16, and 17) as joint positions related to additional display locations and designating virtual line-of-sight data, the user can easily compare performances before and after coaching from an easy-to-view direction in regard to the area from the hip to the toe.

In the conventional video comparison, when referring to video from a direction desired by a user, the position of a camera is changed as needed for shooting. On the other hand, sensing data measured by the 3D laser sensor 50 used in the practice assist device 100 has 3D information. Thus, by designating virtual line-of-sight data, 3D model data seen from the designated virtual line-of-sight can be generated to display the postures in scenes in a comparative manner.

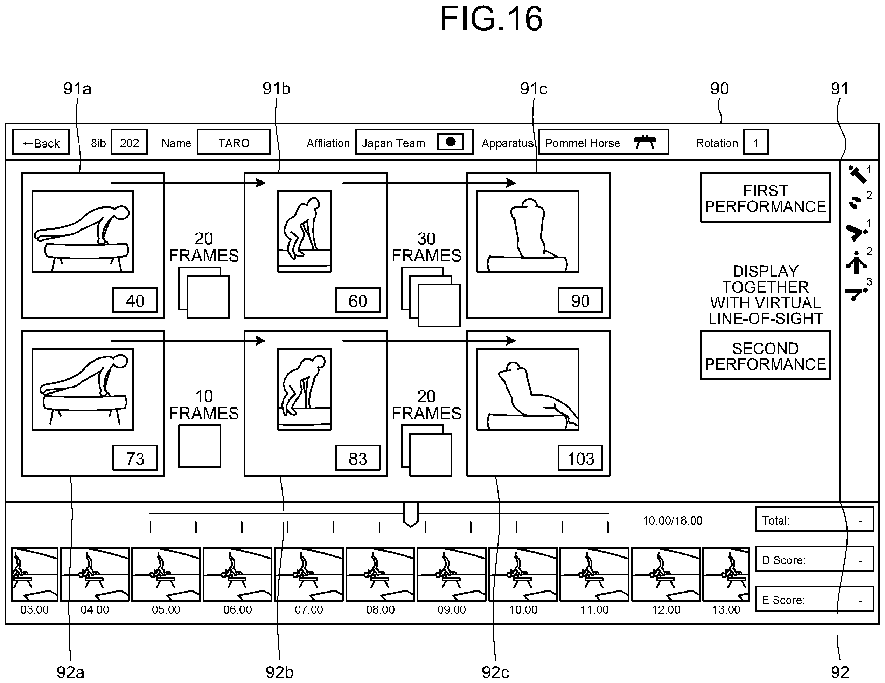

"Processing 5" executed by the output unit 165 is described. The processing 5 executed by the output unit 165 is processing for generating information on a display screen 90 illustrated in FIG. 16 and outputting the generated information to the display unit 140. FIG. 16 is a diagram (5) illustrating an example of the display screen displayed by the practice assist device according to the first example.

Similarly to the processing 3, the output unit 165 generates images 91a, 91b, and 91c of first 3D model data of scenes A, B, and C seen from a virtual line-of-sight with reference to virtual line-of-sight data, and places the images in a display region 91 in chronological order. The output unit 165 generates images 92a, 92b, and 92c of second 3D model data of the scenes A, B, and C seen from the virtual line-of-sight with reference to the virtual line-of-sight data, and places the images in a display region 92 in chronological order.

The output unit 165 displays a time interval based on the number of frames between scenes in such a manner that the time interval can be grasped. For example, the output unit 165 displays a "rectangle" every 10 frames based on the number of frames between scenes. The output unit 165 compares the frame number of a sensing frame corresponding to each scene with the sensing DB 151 to calculate the number of frames between scenes.

For example, when the number of frames between a first sensing frame corresponding to a scene A and a first sensing frame corresponding to a scene B is 20 frames, the output unit 165 displays two "rectangles" between the image 91a and the image 91b. When the number of frames between the first sensing frame corresponding to the scene B and a first sensing frame corresponding to a scene C is 30 frames, the output unit 165 displays three "rectangles" between the image 91b and the image 91c.

When the number of frames between a second sensing frame corresponding to the scene A and a second sensing frame corresponding to the scene B is 10 frames, the output unit 165 displays one "rectangle" between the image 92a and the image 92b. When the number of frames between the second sensing frame corresponding to the scene B and a second sensing frame corresponding to a scene C is 20 frames, the output unit 165 displays two "rectangles" between the image 92b and the image 92c.

The practice assist device 100 displays the display screen 90 as illustrated in FIG. 16 on the display unit 140, so that the user can easily visually grasp the number of frames between scenes. The user can easily grasp performance speed of a skill performed by the player 10, and compare a timing difference. For example, when the first performance and the second performance are compared, the number of rectangles in the first performance between images is larger than the number of rectangles in the second performance, and hence the fact that the timing of the second performance is faster than that of the first performance can be easily grasped.

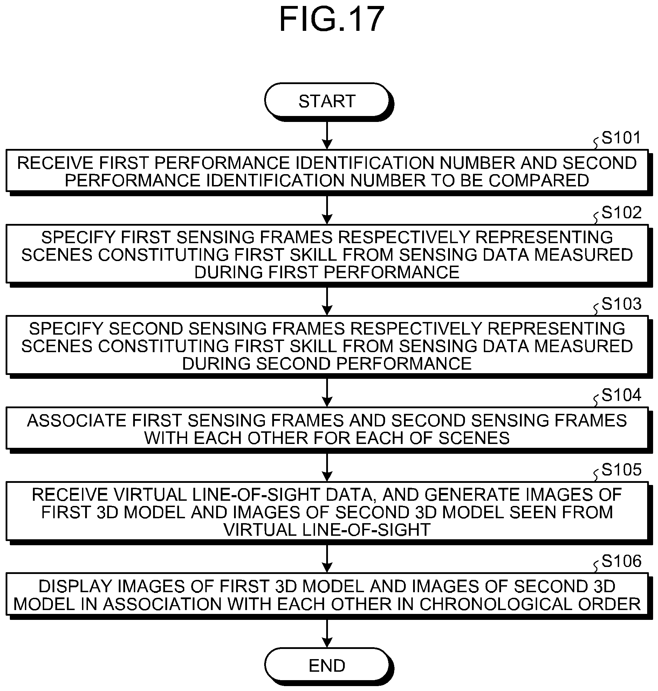

Next, an example of a processing procedure of the practice assist device 100 according to the first example is described. FIG. 17 is a flowchart (1) illustrating a processing procedure of the practice assist device according to the first example. As illustrated in FIG. 17, the reception unit 163 in the practice assist device 100 receives a first performance identification number and a second performance identification number to be compared (Step S101).

The specifying unit 164 in the practice assist device 100 specifies a plurality of first sensing frames respectively representing a plurality of scenes constituting a first skill from sensing data measured during a first performance (during first performance corresponding to first performance identification number) (Step S102).

The specifying unit 164 specifies a plurality of second sensing frames respectively representing the scenes constituting the first skill from sensing data measured during a second performance (during second performance corresponding to second performance identification number) (Step S103) .

The output unit 165 in the practice assist device 100 associates the first sensing frames and the second sensing frames for each of the scenes (Step S104). The reception unit 163 receives virtual line-of-sight data, and the output unit 165 generates images of a first 3D model and images of a second 3D model seen from a virtual line-of-sight (Step S105). The output unit 165 displays the images of the first 3D model and the images of the second 3D model in association with each other in chronological order (Step S106).

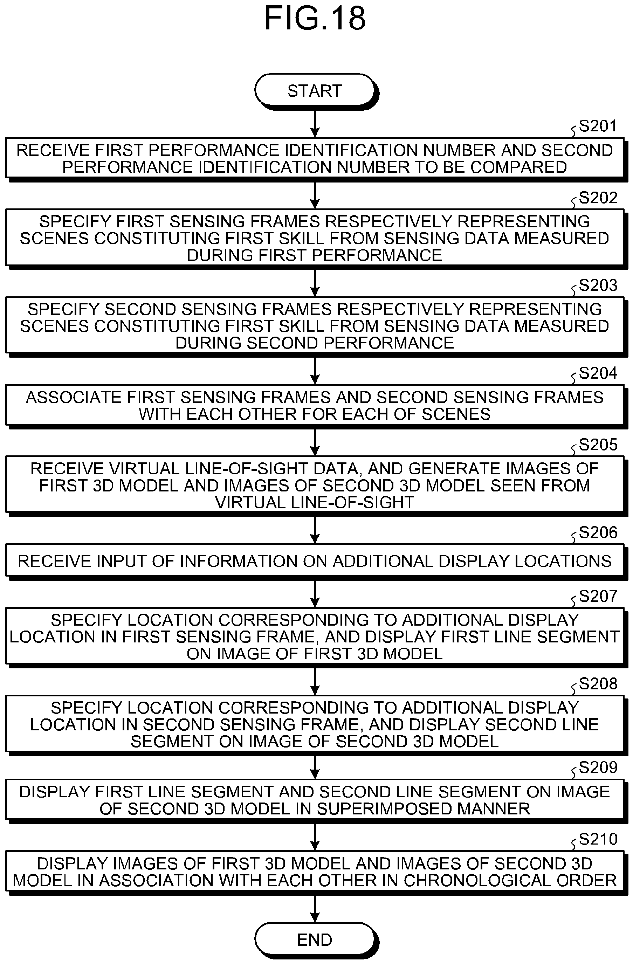

FIG. 18 is a flowchart (2) illustrating a processing procedure of the practice assist device according to the first example. As illustrated in FIG. 18, the reception unit 163 in the practice assist device 100 receives a first performance identification number and a second performance identification number to be compared (Step S201).

The specifying unit 164 in the practice assist device 100 specifies a plurality of first sensing frames respectively representing a plurality of scenes constituting a first skill from sensing data measured during a first performance (during first performance corresponding to first performance identification number) (Step S202).

The specifying unit 164 specifies a plurality of second sensing frames respectively representing the scenes constituting the first skill from sensing data measured during a second performance (during second performance corresponding to second performance identification number) (Step S203).

The output unit 165 in the practice assist device 100 associates the first sensing frames and the second sensing frames for each of the scenes (Step S204). The reception unit 163 receives virtual line-of-sight data, and the output unit 165 generates images of a first 3D model and images of a second 3D model seen from a virtual line-of-sight (Step S205).

The reception unit 163 receives input of information on additional display locations (Step S206). The output unit 165 specifies locations in the first sensing frames that correspond to the additional display locations, and displays a first line segment on the image of the first 3D model (Step S207). For example, the first line segment corresponds to the line segment 89a in FIG. 15.

The output unit 165 specifies locations in the second sensing frames that correspond to the additional display locations, and displays a second line segment on the image of the second 3D model (Step S208). For example, the second line segment corresponds to the line segment 89b in FIG. 15.

The output unit 165 displays the first line segment and the second line segment on the image of the second 3D model in a superimposed manner (Step S209). The output unit 165 displays the images of the first 3D model and the images of the second 3D model in association with each other in chronological order (Step S210).

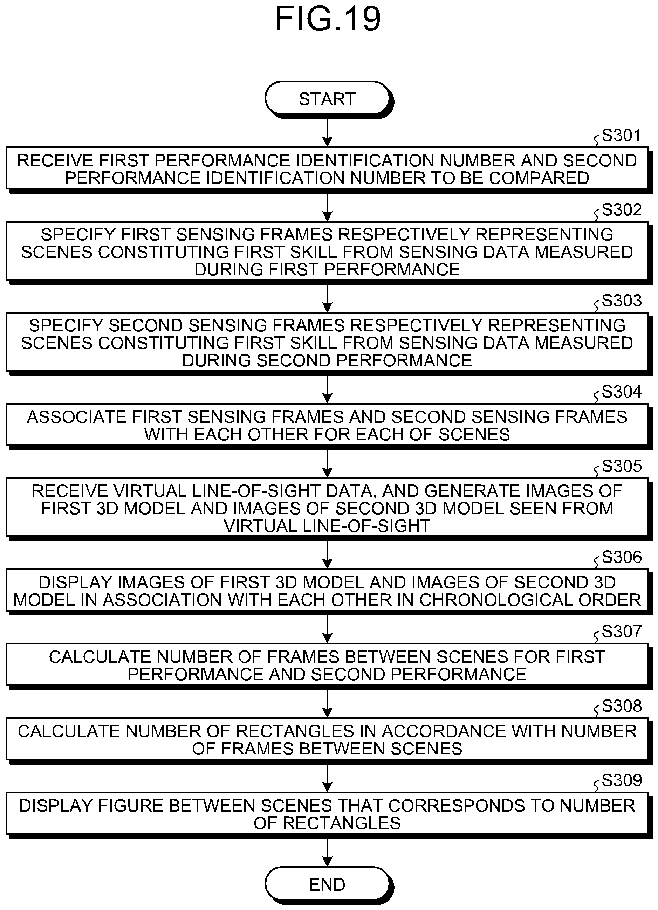

FIG. 19 is a flowchart (3) illustrating a processing procedure of the practice assist device according to the first example. As illustrated in FIG. 19, the reception unit 163 in the practice assist device 100 receives a first performance identification number and a second performance identification number to be compared (Step S301).

The specifying unit 164 in the practice assist device 100 specifies a plurality of first sensing frames respectively representing a plurality of scenes constituting a first skill from sensing data measured during a first performance (during first performance corresponding to first performance identification number) (Step S302).

The specifying unit 164 specifies a plurality of second sensing frames respectively representing the scenes constituting the first skill from sensing data measured during a second performance (during second performance corresponding to second performance identification number) (Step S303).

The output unit 165 in the practice assist device 100 associates the first sensing frames and the second sensing frames for each of the scenes (Step S304). The reception unit 163 receives virtual line-of-sight data, and the output unit 165 generates images of a first 3D model and images of a second 3D model seen from a virtual line-of-sight (Step S305). The output unit 165 displays the images of the first 3D model and the images of the second 3D model in association with each other in chronological order (Step S306).

The output unit 165 calculates the numbers of frames between scenes in the first performance and the second performance (Step S307). The output unit 165 calculates the number of rectangles in accordance with the number of frames between scenes (Step S308). The output unit 165 displays a figure corresponding to the number of rectangles between the scenes (Step S309).

Next, the effects of the practice assist device 100 according to the first example are described. The practice assist device 100 specifies first sensing frames corresponding to scenes constituting a first skill from sensing data measured during a first performance. The practice assist device 100 specifies second sensing frames corresponding to the scenes constituting the first skill from sensing data measured during a second performance. The practice assist device 100 displays, for each of the scenes, the first sensing frames and the second sensing frames in association with each other in chronological order. In this manner, the practice assist device 100 can display the postures of the player 10 corresponding to a plurality of scenes to be compared in a comparative manner.

Although not illustrated in the display screen 80 illustrated in FIG. 4 and the display screens 82 to 90 illustrated in FIG. 13 to FIG. 16, the output unit 165 may perform the following processing. For example, the output unit 165 may synchronize the frame numbers of sensing frames displayed on the display screens 80 and 82 to 90, and display video frames in the video DB 153 in predetermined regions on the display screens 80 and 82 to 90.

Second Example

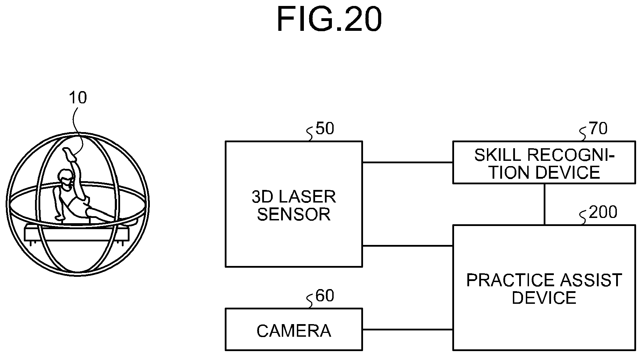

FIG. 20 is a diagram illustrating an example of a practice assist system according to a second example. As illustrated in FIG. 20, the practice assist system includes a 3D laser sensor 50, a camera 60, a skill recognition device 70, and a practice assist device 200. Of these, the descriptions on the 3D laser sensor 50, the camera 60, and the skill recognition device 70 are the same as those with reference to FIG. 1.

In the second example, the case where a player 10 performs a performance of a first skill and thereafter performs a performance of the first skill again is described as an example. A performance for the first time is referred to as "first performance", and a performance for the second time is referred to as "second performance". Regarding the first performance and the second performance, the player 10 performs performances of the same first skill. In the second example, the case where the player 10 performs gymnastics performance is described as an example, but the same can be applied to other rating competitions (such as figure skating).

The practice assist device 200 compares a transition of first skeleton data corresponding to first sensing data and a transition of second skeleton data corresponding to second sensing data to specify a scene in which a difference between the transition of first skeleton data and the transition of second skeleton data is equal to or more than a predetermined value among a plurality of scenes. For example, the scene in which the difference is equal to or more than the predetermined value corresponds to a scene in which the player 10 has failed a skill among scenes. The practice assist device 200 generates and displays a display screen in such a manner that the timing of the specified scene can be grasped.

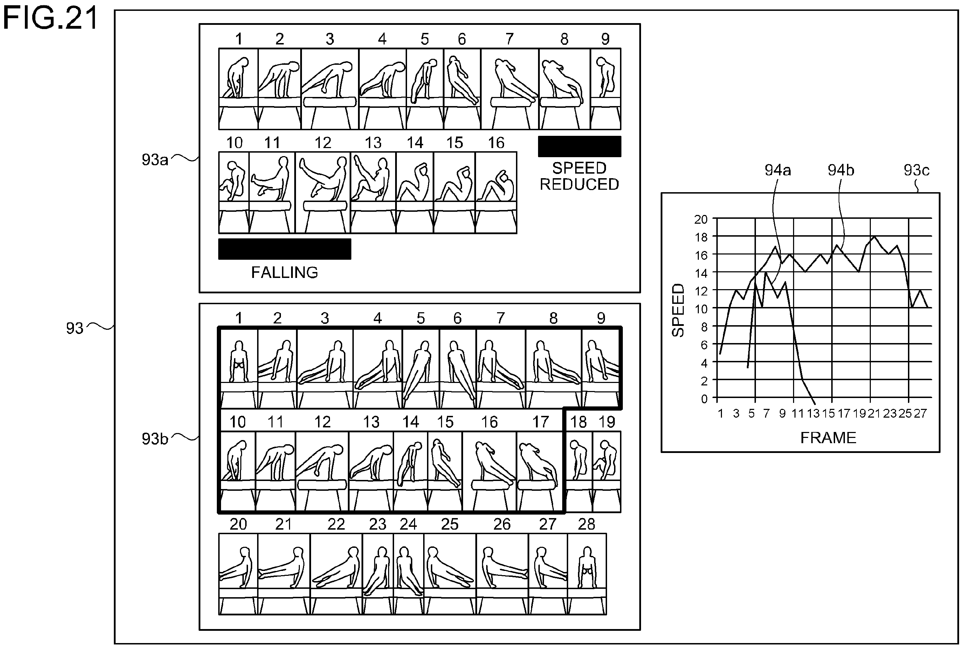

FIG. 21 is a diagram illustrating an example of a display screen displayed by the practice assist device according to the second example. As illustrated in FIG. 21, a display screen 93 includes a display region 93a, a display region 93b, and a display region 93c.

For example, a first skill includes a first scene, a second scene, ..., and an m-th scene. The frame numbers of sensing frames corresponding to the first scene to the m-th scene are frame numbers 1 to m. In the display region 93a, 3D models (images of 3D model data seen from virtual line-of-sight) of first sensing frames corresponding to the first scene to the m-th scene are displayed. In the display region 93b, 3D models of second sensing frames corresponding to the first scene to the m-th scene are displayed.

Among the first scene to the m-th scene, scenes in which a difference between a transition of first skeleton data and a transition of second skeleton data is equal to or more than a threshold are scenes having frame numbers 8 to 12 (eighth scene to twelfth scene). In this case, the practice assist device 200 displays images of the 3D model with the frame numbers 8 to 12 in the display region 93a in an emphasized manner.

In the display region 93c, the transition of first skeleton data and the transition of second skeleton data are displayed as a graph. As an example, the transition of skeleton data is swing speed of the right ankle of the player 10. The horizontal axis of the graph in the display region 93c corresponds to the frame number, and the vertical axis corresponds to the swing speed of the right ankle of the player 10. A line segment 94a is a line segment indicating a relation between the swing speed of the right ankle of the player 10 and the frame number corresponds to first skeleton data. A line segment 94b is a line segment indicating a relation between the swing speed of the right ankle of the player 10 and the frame number corresponding to second skeleton data. Compared with the line segment 94b, the line segment 94a indicates that the difference in speed becomes equal to or more than a threshold after the frame number 8, and the player 10 has failed the first performance.

The practice assist device 200 displays the display screen 93 illustrated in FIG. 21, so that the user can easily compare an image of the 3D model that has the failed skill and an image of the 3D model that has the successful skill. By displaying an image in an emphasized manner, the user can easily refer to an image of a 3D model in a failed scene among a plurality of scenes constituting the first skill.

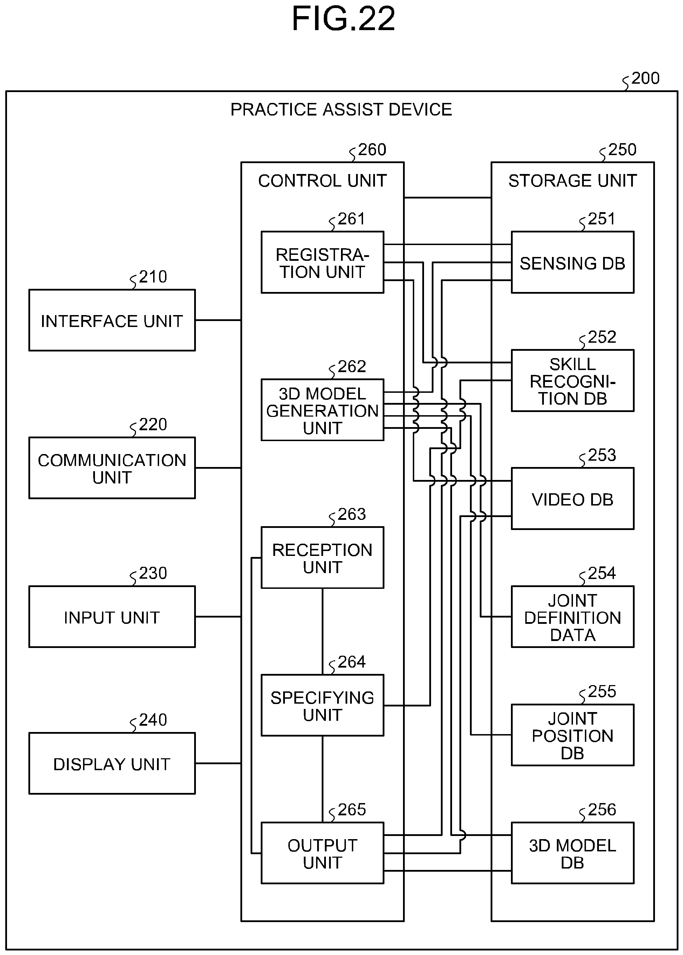

Subsequently, an example of the configuration of the practice assist device 200 illustrated in FIG. 20 is described. FIG. 22 is a functional block diagram illustrating the configuration of the practice assist device according to the second example. As illustrated in FIG. 22, the practice assist device 200 includes an interface unit 210, a communication unit 220, an input unit 230, a display unit 240, a storage unit 250, and a control unit 260. Of these, the descriptions on the interface unit 210, the communication unit 220, the input unit 230, and the display unit 240 are the same as the above descriptions on the interface unit 110, the communication unit 120, the input unit 130, and the display unit 140 with reference to FIG. 5.

The storage unit 250 has a sensing DB 251, a skill recognition DB 252, a video DB 253, joint definition data 254, a joint position DB 255, and a 3D model DB 256. The storage unit 250 corresponds to a storage device such as a semiconductor memory element represented by a RAM, a ROM, and a flash memory, and an HDD.

Of these, the descriptions on the sensing DB 251, the skill recognition DB 252, the video DB 253, the joint definition data 254, the joint position DB 255, and the 3D model DB 256 are the same as the above descriptions on the sensing database (DB) 151, the skill recognition DB 152, the video DB 153, the joint definition data 154, the joint position DB 155, and the 3D model DB 156 with reference to FIG. 5.

The control unit 260 includes a registration unit 261, a 3D model generation unit 262, a reception unit 263, a specifying unit 264, and an output unit 265. The control unit 260 can be implemented by a CPU or an MPU. The control unit 260 can also be implemented by hard wired logic such as an ASIC.

The registration unit 261 acquires sensing data from the 3D laser sensor 50, and registers the acquired sensing data in the sensing DB 251. The registration unit 261 registers the sensing data (frame number, sensing frame) in the sensing DB 251 in association with a performance identification number. The performance identification number is designated by a user through the input unit 230 and the like. The performance identification number is data for uniquely identifying a performance performed by a player 10.

The registration unit 261 acquires recognition result data from the skill recognition device 70, and registers the acquired recognition result data in the skill recognition DB 252. The registration unit 261 registers the skill recognition result data (frame number, skill recognition result data) in the skill recognition DB 252 in association with a performance identification number. The performance identification number is designated by the user through the input unit 230 and the like.

The registration unit 261 acquires video data from the camera 60, and registers the acquired video data in the video DB 253. The registration unit 261 registers the video data (frame number, video frame) in the video DB 253 in association with a performance identification number. The performance identification number is designated by the user through the input unit 230 and the like.

The 3D model generation unit 262 is a processing unit for generating 3D model data corresponding to each frame number having each performance identification number based on the sensing DB 251. The 3D model generation unit 262 registers the generated 3D model data in the 3D model DB 256. The processing for generating 3D model data by the 3D model generation unit 262 is the same as the processing by the 3D model generation unit 162 illustrated in FIG. 5.

The reception unit 263 is a processing unit for receiving, from the input unit 230 and the like, two kinds of performance identification numbers corresponding to two performances to be compared by the user. The reception unit 263 outputs information on the received two kinds of performance identification numbers to the specifying unit 264. For example, two performances to be compared by the user are referred to as "first performance" and "second performance". The performance identification number corresponding to the first performance is referred to as "first performance identification number", and the performance identification number corresponding to the second performance is referred to as "second performance identification number".

The specifying unit 264 acquires a first performance identification number and a second performance identification number from the reception unit 263. For example, the specifying unit 264 refers to the skill recognition DB 252 for skill recognition result data having each frame number corresponding to the first performance identification number, and specifies frame numbers (hereinafter referred to as "first frame numbers") respectively representing a plurality of scenes constituting a skill (first skill) in the first performance. The specifying unit 264 outputs the first performance identification number and the specified first frame numbers to the output unit 265.

The specifying unit 264 refers to the skill recognition DB 252 for skill recognition result data having each frame number corresponding to the second performance identification number, and specifies frame numbers (hereinafter referred to as "second frame numbers") respectively representing the scenes constituting the skill (first skill) in the second performance. The specifying unit 264 outputs the second performance identification number and the specified second frame numbers to the output unit 265.

A plurality of sensing frames corresponding to the first frame numbers having the first performance identification number are referred to as a plurality of "first sensing frames". A plurality of sensing frames corresponding to the second frame numbers having the second performance identification number are referred to as a plurality of "second sensing frames".

Furthermore, the specifying unit 264 acquires each piece of skeleton data (first skeleton data) corresponding to each of the specified first frame numbers from the 3D model DB 256. The specifying unit 264 calculates a transition of the first skeleton data every predetermined number of frames. For example, the transition of first skeleton data corresponds to moving speed of the position of a predetermined joint among a plurality of joints included in the first skeleton data.

The specifying unit 264 acquires each piece of skeleton data (second skeleton data) corresponding to each of the specified second frame numbers from the 3D model DB 256. The specifying unit 264 calculates a transition of the second skeleton data every predetermined number of frames. For example, the transition of second skeleton data corresponds to moving speed of the position of a predetermined joint among a plurality of joints included in the second skeleton data.

The specifying unit 264 compares the transition of first skeleton data and the transition of second skeleton data to specify a scene in which a difference between the transition of first skeleton data and the transition of second skeleton data is equal to or more than a threshold from among a plurality of scenes constituting the first skill. In the following description, the scene in which the difference between the transition of first skeleton data and the transition of second skeleton data is equal to or more than the threshold among the scenes constituting the first skill is referred to as "specified scene". The specifying unit 264 outputs information on the specified scene to the output unit 265.

The specifying unit 264 outputs information on the transition of first skeleton data and information on the transition of second skeleton data to the output unit 265. Examples of the information on the transition of skeleton data include a frame number and moving speed of a predetermined joint included in skeleton data corresponding to the frame number.

When comparing the transition of first skeleton data and the transition of second skeleton data, the specifying unit 264 may adjust the threshold in accordance with the type of joint serving as a reference to calculate the transition. For example, the specifying unit 264 sets the magnitude of a threshold corresponding to the joint position of a finger to be larger than the magnitude of a threshold corresponding to a joint of a knee.

The output unit 265 is a processing unit for displaying, for each of the scenes, the first sensing frames and the second sensing frames in association with each other in chronological order on the display unit 240. The output unit 265 displays sensing frames corresponding to the specified scene among the first sensing frames or the second sensing frames in an emphasized manner. The output unit 265 generates a graph indicating information on the transition of first skeleton data and information on the transition of second skeleton data, and displays the graph on the display unit 240.

For example, the output unit 265 generates the display screen 93 described above with reference to FIG. 21, and displays the display screen 93 on the display unit 240.

Specifically, the output unit 265 uses the frame number of a first sensing frame corresponding to each scene among first sensing frames as a key to detect corresponding first 3D model data from the 3D model DB 256. The output unit 265 generates images of first 3D model data seen from a virtual line-of-sight with reference to virtual line-of-sight data, and places the images in the display region 93a. The output unit 265 displays an image of the 3D model corresponding to the specified scene among the images of the 3D model in an emphasized manner.

The output unit 265 uses the frame number of a second sensing frame corresponding to each scene among second sensing frames as a key to detect corresponding second 3D model data from the 3D model DB 256. The output unit 265 generates images of second 3D model data seen from the virtual line-of-sight with reference to the virtual line-of-sight data, and places the images in the display region 93b.

The output unit 265 plots the transition of first skeleton data and the transition of second skeleton data on a graph in which the horizontal axis is the frame number and the vertical axis is the speed, and displays the graph in the display region 93c.

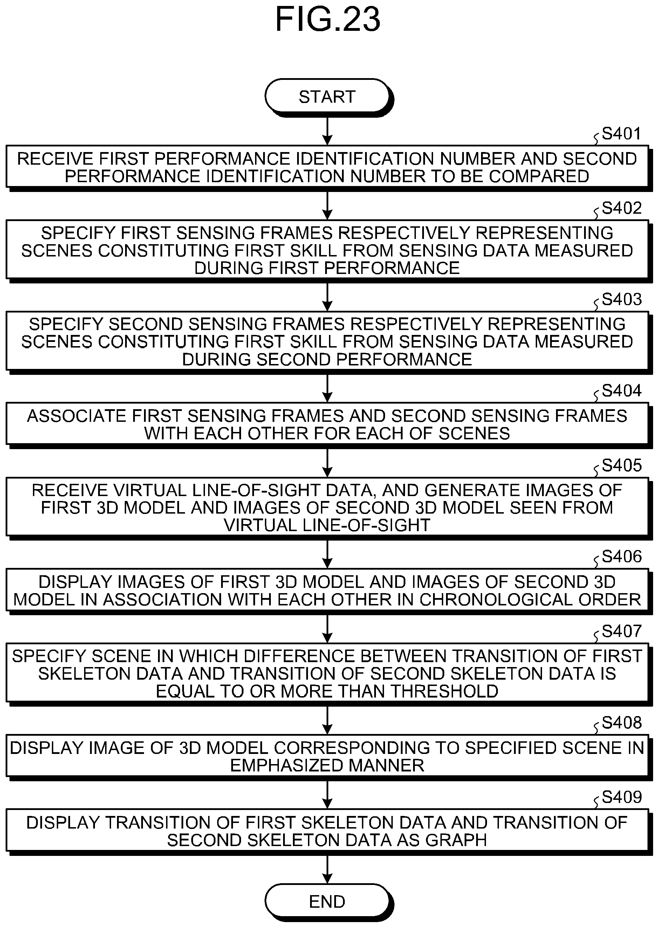

Next, an example of a processing procedure of the practice assist device 200 according to the second example is described. FIG. 23 is a flowchart illustrating the processing procedure of the practice assist device according to the second example. As illustrated in FIG. 23, the reception unit 263 in the practice assist device 200 receives a first performance identification number and a second performance identification number to be compared (Step S401).

The specifying unit 264 in the practice assist device 200 specifies a plurality of first sensing frames respectively representing a plurality of scenes constituting a first skill from sensing data measured during a first performance (during first performance corresponding to first performance identification number) (Step S402).

The specifying unit 264 specifies a plurality of second sensing frames respectively representing the scenes constituting the first skill from sensing data measured during a second performance (during second performance corresponding to second performance identification number) (Step S403).

The output unit 265 in the practice assist device 100 associates the first sensing frames and the second sensing frames for each of the scenes (Step S404). The reception unit 263 receives virtual line-of-sight data, and the output unit 265 generates images of a first 3D model and images of a second 3D model seen from a virtual line-of-sight (Step S405). The output unit 265 displays the images of the first 3D model and the images of the second 3D model in association with each other in chronological order (Step S406).

The specifying unit 264 specifies a scene in which a difference between the transition of first skeleton data and the transition of second skeleton data is equal to or more than a threshold (Step S407). The output unit 265 displays an image of the 3D model corresponding to the specified scene in an emphasized manner (Step S408). The output unit 265 displays the transition of first skeleton data and the transition of second skeleton data as a graph (Step S409).

Next, the effects of the practice assist device 200 according to the second example are described. The practice assist device 200 compares a transition of first skeleton data corresponding to first sensing data and a transition of second skeleton data corresponding to second sensing data to specify a scene in which a difference therebetween is equal to or more than a predetermined value among a plurality of scenes. For example, the scene in which the difference is equal to or more than the predetermined value corresponds to a scene in which the player 10 has failed the skill among the scenes. The practice assist device 200 generates and displays a display screen in such a manner that the timing of the specified scene can be grasped. In this manner, the user can easily compare an image of the 3D model that has the failed skill and an image of the 3D model that has the successful skill. By displaying an image in an emphasized manner and displaying the graph as represented by the display screen 93 in FIG. 21, the user can easily refer to an image of the 3D model in a failed scene and a transition of skeleton until the failure, for example, among the scenes constituting the first skill.

Third Example

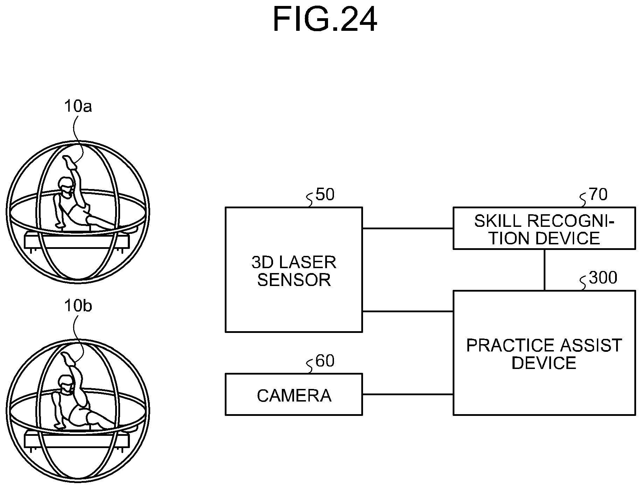

FIG. 24 is a diagram illustrating an example of a practice assist system according to a third example. As illustrated in FIG. 24, the practice assist system includes a 3D laser sensor 50, a camera 60, a skill recognition device 70, and a practice assist device 300. Of these, the descriptions on the 3D laser sensor 50, the camera 60, and the skill recognition device 70 are the same as those with reference to FIG. 1.

In the third example, the case where a player 10a performs a performance of a first skill and thereafter another player 10b whose physical size is different from the player 10a performs a performance of the first skill is described as an example. The performance performed by the player 10a is referred to as "first performance", and the performance performed by the player 10b is referred to as "second performance". Regarding the first performance and the second performance, the players 10a and 10b perform performances of the same first skill. In the third example, the case where the players 10a and 10b perform gymnastics performance is described as an example, but the same can be applied to other rating competitions (such as figure skating).

Similarly to the practice assist device 100 described above in the first example, the practice assist device 300 displays, for each of a plurality of scenes, first sensing frames (first 3D models) of the performance performed by the player 10a and second sensing frames (second 3D models) of the performance performed by the player 10b in association with each other in chronological order. The practice assist device 300 determines the size of the second 3D model with respect to the first 3D model in accordance with a difference between the size of the player 10a and the size of the player 10b, and displays the first 3D model and the second 3D model with the determined size.

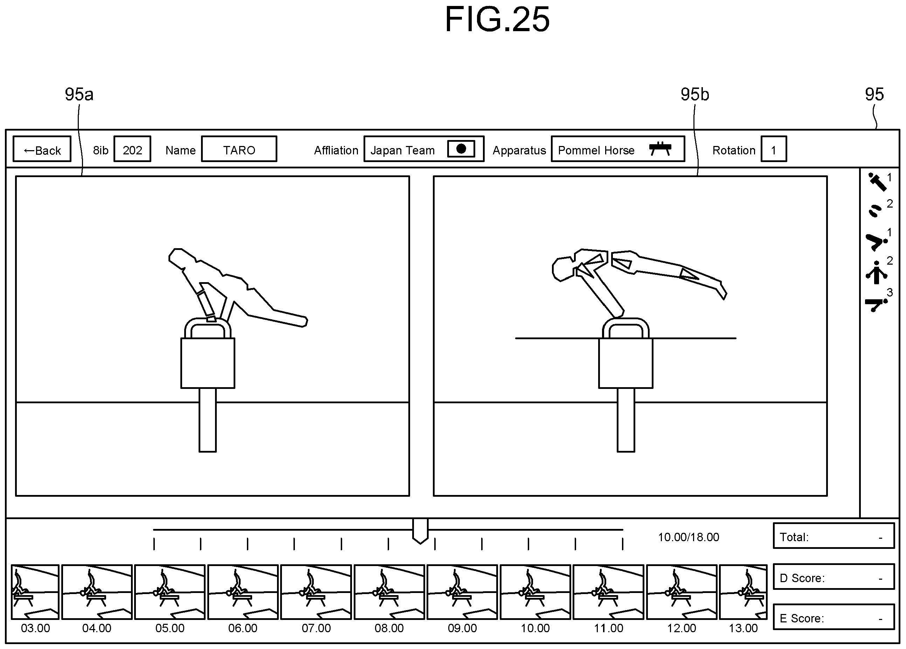

FIG. 25 is a diagram illustrating an example of a display screen displayed by the practice assist device according to the third example. As illustrated in FIG. 25, a display screen 95 includes a display region 95a and a display region 95b. For example, a first skill includes a first scene, a second scene, ..., an m-th scene, and an (m+n)-th scene. In the display region 95a, a 3D model of first sensing frames corresponding to the m-th scene is displayed. In the display region 95b, a 3D model of second sensing frames corresponding to the m-th scene is displayed. The size of the 3D model of the player 10b displayed in the display region 95b is adjusted to a size corresponding to a difference in size between the player 10a and the player 10b. For example, the practice assist device 300 adjusts the scale of the 3D model in the display region 95a and the scale of the 3D model in the display region 95b to each other.

In this manner, the practice assist device 300 displays the 3D model in the display region 95a and the 3D model in the display region 95b with the adjusted scales, and can thus intuitively compare the performances regardless of the physical size difference between the player 10a and the player 10b.

Subsequently, an example of the configuration of the practice assist device 300 illustrated in FIG. 24 is described.

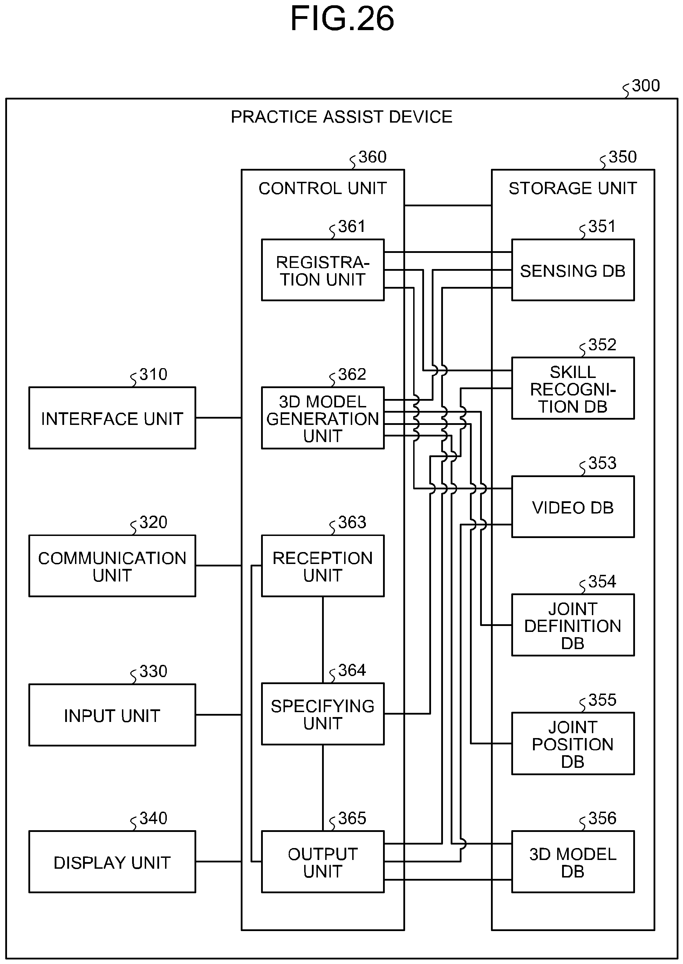

FIG. 26 is a functional block diagram illustrating the configuration of the practice assist device according to the third example. As illustrated in FIG. 26, the practice assist device 300 includes an interface unit 310, a communication unit 320, an input unit 330, a display unit 340, a storage unit 350, and a control unit 360. Of these, the descriptions on the interface unit 310, the communication unit 320, the input unit 330, and the display unit 340 are the same as the above descriptions on the interface unit 110, the communication unit 120, the input unit 130, and the display unit 140 with reference to FIG. 5.

The storage unit 350 has a sensing DB 351, a skill recognition DB 352, a video DB 353, joint definition data 354, a joint position DB 355, and a 3D model DB 356. The storage unit 350 corresponds to a storage device such as a semiconductor memory element represented by a RAM, a ROM, and a flash memory, and an HDD.

Of these, the descriptions on the sensing DB 351, the skill recognition DB 352, the video DB 353, the joint definition data 354, the joint position DB 355, and the 3D model DB 356 are the same as the above descriptions on the sensing database (DB) 151, the skill recognition DB 152, the video DB 153, the joint definition data 154, the joint position DB 155, and the 3D model DB 156 with reference to FIG. 5.

The control unit 360 includes a registration unit 361, a 3D model generation unit 362, a reception unit 363, a specifying unit 364, and an output unit 365. The control unit 360 can be implemented by a CPU or an MPU. The control unit 360 can also be implemented by hard wired logic such as an ASIC.

The registration unit 361 acquires sensing data from the 3D laser sensor 50, and registers the acquired sensing data in the sensing DB 351. The registration unit 361 registers the sensing data (frame number, sensing frame) in the sensing DB 351 in association with a performance identification number. The performance identification number is designated by a user through the input unit 330 and the like. The performance identification number is data for uniquely identifying a performance performed by the player 10a or the player 10b.

The registration unit 361 acquires recognition result data from the skill recognition device 70, and registers the acquired recognition result data in the skill recognition DB 352. The registration unit 361 registers the skill recognition result data (frame number, skill recognition result data) in the skill recognition DB 352 in association with a performance identification number. The performance identification number is designated by the user through the input unit 330 and the like.

The registration unit 361 acquires video data from the camera 60, and registers the acquired video data in the video DB 353. The registration unit 361 registers the video data (frame number, video frame) in the video DB 353 in association with a performance identification number. The performance identification number is designated by the user through the input unit 330 and the like.

The 3D model generation unit 362 is a processing unit for generating 3D model data corresponding to each frame number having each performance identification number based on the sensing DB 351. The 3D model generation unit 362 registers the generated 3D model data in the 3D model DB 356. The processing for generating 3D model data by the 3D model generation unit 362 is the same as the processing of the 3D model generation unit 162 illustrated in FIG. 5.

The 3D model generation unit 362 further executes the following processing in addition to the processing of the 3D model generation unit 162. The 3D model generation unit 362 acquires physical size information on the player 10a and physical size information on the player 10b through the input unit 330 and the like. Examples of the physical size information on a player include a performance identification number, identification information on the player, and information on the height and measurements (such as chest size, waist size, and hip size) of the player. The 3D model generation unit 362 may generate information on the height and measurements of the player based on sensing data from the 3D laser sensor 50.

The 3D model generation unit 362 calculates a difference between the size of the player 10a and the size of the player 10b, and corrects the size of 3D model data on the player 10b in accordance with the calculated difference. For example, the 3D model generation unit 362 calculates a difference value based on Equation (1). $\alpha$, $\beta$, $\gamma$, and $\varepsilon$ in Equation (1) are weighting coefficients set in advance.

$$\text{difference value} = \alpha | (\text{height of player 10b} - \text{height of player 10a}) \times | \beta | (\text{chest size of player 10b} - \text{chest size of player 10a}) \times | \gamma | (\text{waist size of player 10b} - \text{waist size of player 10a}) \times | \varepsilon | (\text{hip size of player 10b} - \text{hip size of player 10a}) | \ldots (1)$$

The 3D model generation unit 362 uses a performance identification number included in physical size information on the player 10b to specify each piece of skeleton data having each frame number of the player 10b from the 3D model DB 356. The 3D model generation unit 362 corrects each piece of skeleton data based on the difference value. For example, the 3D model generation unit 362 corrects the length between joints included in the skeleton data based on Equation (2). In Equation (2), when the physical size of the player 10b is larger than the physical size of the player 10a, a correction value X is a value that becomes smaller as the difference value becomes larger. On the other hand, when the physical size of the player 10b is smaller than the physical size of the player 10a, the correction value X is a value that becomes larger as the difference value becomes larger. The 3D model generation unit 362 may change the correction value X for each set of joints.

$$\texttt{length between joints after correction=length between}$$
$$\texttt{joints before correction×correction value X ... (2)}$$

After correcting each piece of skeleton data corresponding to the player 10b through the above-mentioned processing, the 3D model generation unit 362 generates 3D model data again based on each piece of the corrected skeleton data, and updates the 3D model data corresponding to the player 10b with the generated 3D model data.

The reception unit 363 is a processing unit for receiving, from the input unit 330 and the like, two types of performance identification numbers corresponding to two performances to be compared by the user. The reception unit 363 outputs information on the received two types of performance identification numbers to the specifying unit 364. For example, a performance of the player 10a to be compared by the user is referred to as "first performance", and a performance of the player 10b is referred to as "second performance". The performance identification number corresponding to the first performance is referred to as "first performance identification number", and the performance identification number corresponding to the second performance is referred to as "second performance identification number".

The specifying unit 364 acquires a first performance identification number and a second performance identification number from the reception unit 363. For example, the specifying unit 364 refers to the skill recognition DB 352 for skill recognition result data having each frame number corresponding to the first performance identification number, and specifies frame numbers (hereinafter referred to as "first frame number") respectively representing a plurality of scenes constituting a skill (first skill) in the first performance. The specifying unit 364 outputs the first performance identification number and the specified first frame numbers to the output unit 365.

The specifying unit 364 refers to the skill recognition DB 352 for skill recognition result data having each frame number corresponding to the second performance identification number, and specifies frame numbers (hereinafter referred to as "second frame numbers") respectively representing the scenes constituting the skill (first skill) in the second performance. The specifying unit 364 outputs the second performance identification number and the specified second frame numbers to the output unit 365.

A plurality of sensing frames corresponding to the first frame numbers having the first performance identification number are referred to as a plurality of "first sensing frames". A plurality of sensing frames corresponding to the second frame numbers having the second performance identification number are referred to as a plurality of "second sensing frames".

The output unit 365 is a processing unit for displaying, for each of the scenes, the first sensing frames and the second sensing frames in association with each other in chronological order on the display unit 340.

The output unit 365 generates information on the display screen 95 described above with reference to FIG. 25, and outputs the generated information to the display unit 340. For example, scenes constituting the first performance and the second performance include "scene A, scene B, scene C, ...".

The output unit 365 uses the frame number of a first sensing frame corresponding to the scene A among the first sensing frames as a key to detect corresponding first 3D model data from the 3D model DB 356. The output unit 365 generates an image of first 3D model data seen from a virtual line-of-sight with reference to virtual line-of-sight data, and places the image in the display region 95a. For example, the first 3D model data in the display region 95a corresponds to the player 10a.

The output unit 365 uses the frame number of a second sensing frame corresponding to the scene A among the second sensing frames as a key to detect corresponding second 3D model data from the 3D model DB 356. The output unit 365 generates an image of second 3D model data seen from the virtual line-of-sight with reference to the virtual line-of-sight data, and places the image in the display region 95b. For example, the second 3D model data in the display region 95b corresponds to the player 10b.

The size of the second 3D model data in the display region 95b is corrected based on a difference between the size of the player 10a and the size of the player 10b. In the example illustrated in FIG. 25, the sizes of the 3D models are substantially the same.

The output unit 365 repeats the above-mentioned processing for the other scenes "scene B, scene C, ...", so that first 3D model data corresponding to "scene B, scene C, ..." is displayed in the display region 95a. In the display region 95b, second 3D model data corresponding to "scene B, scene C, ..." is displayed. The output unit 365 synchronizes the scene in the first 3D model data displayed in the display region 95a and the scene in the second 3D model data displayed in the display region 95b.

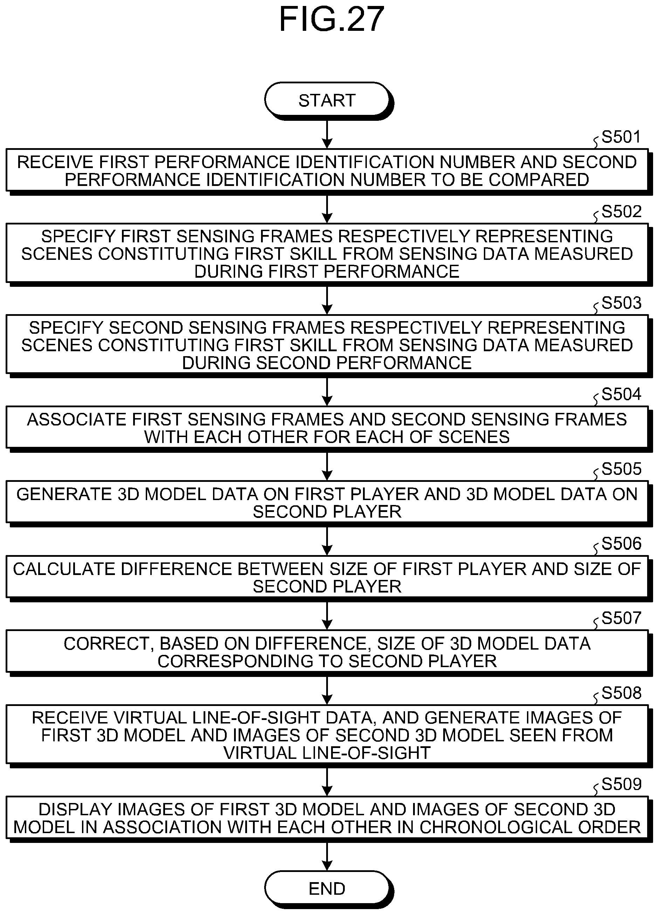

Next, an example of a processing procedure of the practice assist device 300 according to the third example is described. FIG. 27 is a flowchart illustrating the processing procedure of the practice assist device according to the third example. As illustrated in FIG. 27, the reception unit 363 in the practice assist device 300 receives a first performance identification number and a second performance identification number to be compared (Step S501).

The specifying unit 364 in the practice assist device 300 specifies a plurality of first sensing frames respectively representing a plurality of scenes constituting a first skill from sensing data measured during a first performance (during first performance corresponding to first performance identification number) (Step S502).

The specifying unit 364 specifies a plurality of second sensing frames respectively representing the scenes constituting the first skill from sensing data measured during a second performance (during second performance corresponding to second performance identification number) (Step S503).

The output unit 365 in the practice assist device 300 associates the first sensing frames and the second sensing frames with each other for each of the scenes (Step S504).

The 3D model generation unit 362 in the practice assist device 300 generates 3D model data on a first player and 3D model data on a second player (Step S505). For example, the first player is referred to as "player 10a", and the second player is referred to as "player 10b". The 3D model generation unit 362 calculates a difference between the size of the first player and the size of the second player (Step S506). The 3D model generation unit 362 corrects the size of the 3D model data corresponding to the second player based on the difference (Step S507).

The reception unit 363 receives virtual line-of-sight data, and the output unit 365 generates images of a first 3D model and images of a second 3D model seen from a virtual line-of-sight (Step S508). The output unit 365 displays the images of the first 3D model and the images of the second 3D model in association with each other in chronological order (Step S509).

Next, the effects of the practice assist device 300 according to the third example are described. Similarly to the practice assist device 100 described above in the first example, the practice assist device 300 displays, for each of scenes, first sensing frames (first 3D models) of a performance performed by the player 10a and second sensing frames (second 3D models) of a performance performed by the player 10b in association with each other in chronological order. The practice assist device 300 determines the size of the second 3D model with respect to the size of the first 3D model in accordance with a difference between the size of the player 10a and the size of the player 10b, and displays the first 3D model and the second 3D model with the determined size. For example, the practice assist device 300 displays the 3D model in the display region 95a and the 3D model in the display region 95b with the adjusted scales described above with reference to FIG. 25, and can thus intuitively compare the performances regardless of the physical size difference between the player 10a and the player 10b.

In the first to the third examples, the case where the players 10, 10a, and 10b perform pommel horse as a gymnastics event has been described as an example, but the practice assist devices 100, 200, and 300 can similarly execute the processing for floor exercise, still rings, parallel bars, horizontal bar, vault, uneven bars, and balance beam, for example.

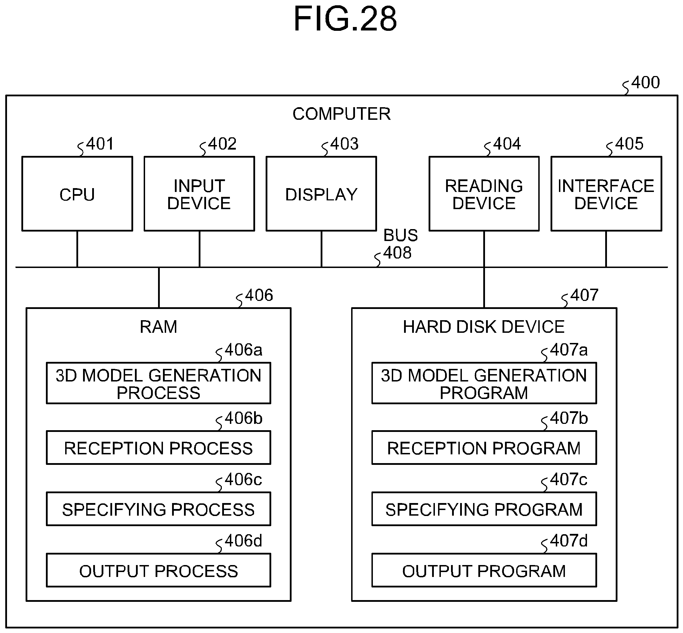

An example of the hardware configuration of a computer for implementing the same functions as in the practice assist device 100 (200, 300) described above in the examples is described. FIG. 28 is a diagram illustrating an example of the hardware configuration of the computer for implementing the same functions as in the practice assist device.

As illustrated in FIG. 28, a computer 400 includes a processor (for example, CPU 401) for executing various kinds of arithmetic processing, an input device 402 for receiving inputs of data from a user, and a display 403. The computer 400 further includes a reading device 404 for reading computer programs and the like from a storage medium and an interface device 405 for exchanging data with another computer through a wireless network. The computer 400 further includes a RAM 406 for temporarily storing various kinds of information therein, and a hard disk device 407. The devices 401 to 407 are connected to a bus 408.

The hard disk device 407 has a 3D model generation program 407a, a reception program 407b, a specifying program 407c, and an output program 407d. The CPU 401 reads and deploys the 3D model generation program 407a, the reception program 407b, the specifying program 407c, and the output program 407d on the RAM 406.

The 3D model generation program 407a functions as a 3D model generation process 406a. The reception program 407b functions as a reception process 406b. The specifying program 407c functions as a specifying process 406c. The output program 407d functions as an output process 406d.

Processing of the 3D model generation process 406a corresponds to the processing of the 3D model generation units 162, 262, and 362. Processing of the reception process 406b corresponds to the processing of the reception units 163, 263, and 363. Processing of the specifying process 406c corresponds to the processing of the specifying units 164, 264, and 364. Processing of the output process 406d corresponds to the processing of the output units 165, 265, and 365.

The computer programs 407a to 407d do not need to be initially stored in the hard disk device 407. For example, the computer programs are stored in a "portable physical medium" such as a flexible disk (FD), a CD-ROM, a DVD disk, a magneto-optical disk, or an IC card to be inserted to the computer 400. The computer 400 may read and execute the computer programs 407a to 407d.

Reference Signs List

| | |
|---|---|
| 100, 200, 300 | PRACTICE ASSIST DEVICE |
| 162, 262, 362 | 3D MODEL GENERATION UNIT |
| 163, 263, 363 | RECEPTION UNIT |
| 164, 264, 364 | SPECIFYING UNIT |
| 165, 265, 365 | OUTPUT UNIT |

**Claims**

1. A practice assist program for causing a computer to execute processing for:

   specifying, from first sensing data measured during a performance of a first skill, a plurality of first frames respectively representing a plurality of scenes constituting the first skill;
   specifying, from second sensing data measured during another performance of the first skill, a plurality of second frames respectively representing the scenes constituting the first skill; and
   displaying, for at least one of the scenes, the first frames and the second frames in association with each other.

2. The practice assist program according to claim 1, wherein the first sensing data and the second sensing data are data having three-dimensional information on a subject obtained from a distance image sensor, and the displaying displays the first frames and the second frames in association with each other for at least one of the scenes seen from a designated virtual line-of-sight.

3. The practice assist program according to claim 2, wherein the displaying displays a first frame and a second frame in such a manner that a difference in posture is able to be grasped based on skeleton data corresponding to the first frame and the second frame where the first frame is a first frame among the first frames and the second frame is a second frame among the second frames and the first frame and the second frame correspond to a specific scene among the scenes.

4. The practice assist program according to claim 3, wherein the first sensing data is data on a performance of the first skill before coaching, and the second sensing data is data on a performance of the first skill after coaching.

5. The practice assist program according to claim 3, further comprising receiving input of a location for additional display on a first frame among the first frames, specifying a second frame that is a frame corresponding to the first frame among the second frames, and specifying a location on the second frame that corresponds to the received location for additional display on the first frame, wherein
   the displaying displays the additional display at the specified location on the second frame in a superimposed manner.

6. The practice assist program according to claim 2, further comprising specifying, based on a transition of first skeleton data corresponding to the first sensing data and a transition of second skeleton data corresponding to the second sensing data, a scene in which a difference between the first skeleton data and the second skeleton data is equal to or more than a predetermined value among the scenes, wherein
   the displaying displays the first frames and the second frames in such a manner that timing of the specified scene is able to be grasped.

7. The practice assist program according to claim 6, wherein the displaying displays the transition of the first skeleton data and the transition of the second skeleton data together as a single graph.

8. The practice assist program according to claim 2, wherein the displaying displays a first scene in the scenes and a second scene next to the first scene in such a manner that a time interval between the first scene and the second scene is able to be grasped based on number of frames between a frame among the first frames that corresponds to the first scene and a frame among the first frames that corresponds to the second scene.

9. The practice assist program according to claim 2, further comprising determining, in accordance with a difference between a size of a first performer related to the first sensing data and a size of a second performer related to the second sensing data, a size of a three-dimensional model of the second performer in each of the second frames with respect to a size of a three-dimensional model of the first performer, wherein
the displaying displays the three-dimensional model of the first performer and the three-dimensional model of the second performer with the determined size.

10. The practice assist program according to claim 9, wherein the first performer and the second performer are different performers.

11. The practice assist program according to any one of claims 1 to 10, wherein, for each of the scenes, the first frames and the second frames are displayed in association with each other in chronological order.

12. A practice assist method to be executed by a computer, the method comprising executing processing for:

specifying, from first sensing data measured during a performance of a first skill, a plurality of first frames respectively representing a plurality of scenes constituting the first skill;
specifying, from second sensing data measured during another performance of the first skill, a plurality of second frames respectively representing the scenes constituting the first skill; and
displaying, for at least one of the scenes, the first frames and the second frames in association with each other.

13. A practice assist system comprising a sensor and a practice assist device, the practice assist system comprising:

a specifying unit for specifying a plurality of first frames respectively representing a plurality of scenes constituting a first skill from first sensing data measured by the sensor during a performance of the first skill, and specifying a plurality of second frames respectively representing the scenes constituting the first skill from second sensing data measured by the sensor during another performance of the first skill; and
a display unit for displaying, for at least one of the scenes, the first frames and the second frames in association with each other.

# FIG.1

# FIG.2

# FIG.3

# FIG.4

EP 3 677 320 A1

# FIG.5

```
                                    PRACTICE ASSIST DEVICE                        ⌐100

                                ⌐160                          ⌐150
                           CONTROL UNIT                  STORAGE UNIT

                               ⌐161                          ⌐151
                           REGISTRA-                      SENSING DB
          ⌐110             TION UNIT
    INTERFACE UNIT
                                                            ⌐152
                               ⌐162                      SKILL
                           3D MODEL                      RECOGNI-
          ⌐120             GENERA-                       TION DB
    COMMUNICATION          TION UNIT
    UNIT
                                                            ⌐153
                               ⌐163                      VIDEO DB
                           RECEPTION
          ⌐130             UNIT
    INPUT UNIT
                                                            ⌐154
                                                         JOINT
                               ⌐164                      DEFINITION
                           SPECIFYING                    DATA
          ⌐140             UNIT
    DISPLAY UNIT
                                                            ⌐155
                                                         JOINT
                                                         POSITION
                               ⌐165                      DB
                           OUTPUT
                           UNIT                             ⌐156
                                                         3D MODEL
                                                         DB
```

# FIG.6

151

| PERFORMANCE IDENTIFICATION NUMBER | FRAME NUMBER | SENSING FRAME |
|---|---|---|
| P101 | 1 | SENSING FRAME CORRESPONDING TO FRAME NUMBER "1" HAVING PERFORMANCE IDENTIFICATION NUMBER "P101" |
| | 2 | SENSING FRAME CORRESPONDING TO FRAME NUMBER "2" HAVING PERFORMANCE IDENTIFICATION NUMBER "P101" |
| | 3 | SENSING FRAME CORRESPONDING TO FRAME NUMBER "3" HAVING PERFORMANCE IDENTIFICATION NUMBER "P101" |
| | ... | ... |
| P102 | 1 | SENSING FRAME CORRESPONDING TO FRAME NUMBER "1" HAVING PERFORMANCE IDENTIFICATION NUMBER "P102" |
| | 2 | SENSING FRAME CORRESPONDING TO FRAME NUMBER "2" HAVING PERFORMANCE IDENTIFICATION NUMBER "P102" |
| | 3 | SENSING FRAME CORRESPONDING TO FRAME NUMBER "3" HAVING PERFORMANCE IDENTIFICATION NUMBER "P102" |
| | ... | ... |
| P103 | 1 | SENSING FRAME CORRESPONDING TO FRAME NUMBER "1" HAVING PERFORMANCE IDENTIFICATION NUMBER "P103" |
| | 2 | SENSING FRAME CORRESPONDING TO FRAME NUMBER "2" HAVING PERFORMANCE IDENTIFICATION NUMBER "P103" |
| | 3 | SENSING FRAME CORRESPONDING TO FRAME NUMBER "3" HAVING PERFORMANCE IDENTIFICATION NUMBER "P103" |
| | ... | ... |
| ... | | |

# FIG.7

152

| PERFORMANCE IDENTIFICATION NUMBER | FRAME NUMBER | SKILL RECOGNITION RESULT DATA |
|---|---|---|
| P101 | 1 | SKILL RECOGNITION RESULT DATA CORRESPONDING TO FRAME NUMBER "1" HAVING PERFORMANCE IDENTIFICATION NUMBER "P101" |
| | 2 | SKILL RECOGNITION RESULT DATA CORRESPONDING TO FRAME NUMBER "2" HAVING PERFORMANCE IDENTIFICATION NUMBER "P101" |
| | 3 | SKILL RECOGNITION RESULT DATA CORRESPONDING TO FRAME NUMBER "3" HAVING PERFORMANCE IDENTIFICATION NUMBER "P101" |
| | ... | ... |
| P102 | 1 | SKILL RECOGNITION RESULT DATA CORRESPONDING TO FRAME NUMBER "1" HAVING PERFORMANCE IDENTIFICATION NUMBER "P102" |
| | 2 | SKILL RECOGNITION RESULT DATA CORRESPONDING TO FRAME NUMBER "2" HAVING PERFORMANCE IDENTIFICATION NUMBER "P102" |
| | 3 | SKILL RECOGNITION RESULT DATA CORRESPONDING TO FRAME NUMBER "3" HAVING PERFORMANCE IDENTIFICATION NUMBER "P102" |
| | ... | ... |
| P103 | 1 | SKILL RECOGNITION RESULT DATA CORRESPONDING TO FRAME NUMBER "1" HAVING PERFORMANCE IDENTIFICATION NUMBER "P103" |
| | 2 | SKILL RECOGNITION RESULT DATA CORRESPONDING TO FRAME NUMBER "2" HAVING PERFORMANCE IDENTIFICATION NUMBER "P103" |
| | 3 | SKILL RECOGNITION RESULT DATA CORRESPONDING TO FRAME NUMBER "3" HAVING PERFORMANCE IDENTIFICATION NUMBER "P103" |
| | ... | ... |
| ... | | |

# FIG.8

153

| PERFORMANCE IDENTIFICATION NUMBER | FRAME NUMBER | VIDEO FRAME |
|---|---|---|
| P101 | 1 | VIDEO FRAME CORRESPONDING TO FRAME NUMBER "1" HAVING PERFORMANCE IDENTIFICATION NUMBER "P101" |
| | 2 | VIDEO FRAME CORRESPONDING TO FRAME NUMBER "2" HAVING PERFORMANCE IDENTIFICATION NUMBER "P101" |
| | 3 | VIDEO FRAME CORRESPONDING TO FRAME NUMBER "3" HAVING PERFORMANCE IDENTIFICATION NUMBER "P101" |
| | ... | ... |
| P102 | 1 | VIDEO FRAME CORRESPONDING TO FRAME NUMBER "1" HAVING PERFORMANCE IDENTIFICATION NUMBER "P102" |
| | 2 | VIDEO FRAME CORRESPONDING TO FRAME NUMBER "2" HAVING PERFORMANCE IDENTIFICATION NUMBER "P102" |
| | 3 | VIDEO FRAME CORRESPONDING TO FRAME NUMBER "3" HAVING PERFORMANCE IDENTIFICATION NUMBER "P102" |
| | ... | ... |
| P103 | 1 | VIDEO FRAME CORRESPONDING TO FRAME NUMBER "1" HAVING PERFORMANCE IDENTIFICATION NUMBER "P103" |
| | 2 | VIDEO FRAME CORRESPONDING TO FRAME NUMBER "2" HAVING PERFORMANCE IDENTIFICATION NUMBER "P103" |
| | 3 | VIDEO FRAME CORRESPONDING TO FRAME NUMBER "3" HAVING PERFORMANCE IDENTIFICATION NUMBER "P103" |
| | ... | ... |
| ... | | |

# FIG.9

# FIG.10

155

| PERFOR-MANCE IDENTIFI-CATION NUMBER | FRAME NUMBER | X0 | Y0 | Z0 | ... | X17 | Y17 | Z17 |
|---|---|---|---|---|---|---|---|---|
| P101 | 1 | 100 | 20 | 0 | | 200 | 40 | 5 |
| P101 | 2 | 101 | 25 | 5 | | 202 | 39 | 15 |
| P101 | 3 | 110 | 32 | 7 | | 210 | 45 | 12 |
| ... | ... | | | | | | | |
| P101 | 100 | 201 | 125 | 30 | | 225 | 150 | 10 |
| ... | | | | | | | | |
| P102 | 1 | 100 | 21 | 0 | ... | 210 | 45 | 0 |
| ... | | | | | | | | |

# FIG.11

〆156

| PERFOR-MANCE IDENTIFI-CATION NUMBER | FRAME NUMBER | SKELETON DATA | 3D MODEL DATA |
|---|---|---|---|
| P101 | 1 | SKELETON DATA WITH FRAME NUMBER "1" HAVING PERFORMANCE IDENTIFICATION NUMBER "P101" | 3D MODEL DATA WITH FRAME NUMBER "1" HAVING PERFORMANCE IDENTIFICATION NUMBER "P101" |
| | 2 | SKELETON DATA WITH FRAME NUMBER "2" HAVING PERFORMANCE IDENTIFICATION NUMBER "P101" | 3D MODEL DATA WITH FRAME NUMBER "2" HAVING PERFORMANCE IDENTIFICATION NUMBER "P101" |
| | 3 | SKELETON DATA WITH FRAME NUMBER "3" HAVING PERFORMANCE IDENTIFICATION NUMBER "P101" | 3D MODEL DATA WITH FRAME NUMBER "3" HAVING PERFORMANCE IDENTIFICATION NUMBER "P101" |
| | ... | ... | ... |
| P102 | 1 | SKELETON DATA WITH FRAME NUMBER "1" HAVING PERFORMANCE IDENTIFICATION NUMBER "P102" | 3D MODEL DATA WITH FRAME NUMBER "1" HAVING PERFORMANCE IDENTIFICATION NUMBER "P102" |
| | 2 | SKELETON DATA WITH FRAME NUMBER "2" HAVING PERFORMANCE IDENTIFICATION NUMBER "P102" | 3D MODEL DATA WITH FRAME NUMBER "2" HAVING PERFORMANCE IDENTIFICATION NUMBER "P102" |
| | 3 | SKELETON DATA WITH FRAME NUMBER "3" HAVING PERFORMANCE IDENTIFICATION NUMBER "P102" | 3D MODEL DATA WITH FRAME NUMBER "3" HAVING PERFORMANCE IDENTIFICATION NUMBER "P102" |
| | ... | ... | ... |
| P103 | 1 | SKELETON DATA WITH FRAME NUMBER "1" HAVING PERFORMANCE IDENTIFICATION NUMBER "P103" | 3D MODEL DATA WITH FRAME NUMBER "1" HAVING PERFORMANCE IDENTIFICATION NUMBER "P103" |
| | 2 | SKELETON DATA WITH FRAME NUMBER "2" HAVING PERFORMANCE IDENTIFICATION NUMBER "P103" | 3D MODEL DATA WITH FRAME NUMBER "2" HAVING PERFORMANCE IDENTIFICATION NUMBER "P103" |
| | 3 | SKELETON DATA WITH FRAME NUMBER "3" HAVING PERFORMANCE IDENTIFICATION NUMBER "P103" | 3D MODEL DATA WITH FRAME NUMBER "3" HAVING PERFORMANCE IDENTIFICATION NUMBER "P103" |
| | ... | ... | ... |
| ... | | | |

# FIG.12

# FIG.13

EP 3 677 320 A1

# FIG.14

EP 3 677 320 A1

# FIG.15

EP 3 677 320 A1

FIG.16

# FIG.17

START

S101

RECEIVE FIRST PERFORMANCE IDENTIFICATION NUMBER AND SECOND PERFORMANCE IDENTIFICATION NUMBER TO BE COMPARED

S102

SPECIFY FIRST SENSING FRAMES RESPECTIVELY REPRESENTING SCENES CONSTITUTING FIRST SKILL FROM SENSING DATA MEASURED DURING FIRST PERFORMANCE

S103

SPECIFY SECOND SENSING FRAMES RESPECTIVELY REPRESENTING SCENES CONSTITUTING FIRST SKILL FROM SENSING DATA MEASURED DURING SECOND PERFORMANCE

S104

ASSOCIATE FIRST SENSING FRAMES AND SECOND SENSING FRAMES WITH EACH OTHER FOR EACH OF SCENES

S105

RECEIVE VIRTUAL LINE-OF-SIGHT DATA, AND GENERATE IMAGES OF FIRST 3D MODEL AND IMAGES OF SECOND 3D MODEL SEEN FROM VIRTUAL LINE-OF-SIGHT

S106

DISPLAY IMAGES OF FIRST 3D MODEL AND IMAGES OF SECOND 3D MODEL IN ASSOCIATION WITH EACH OTHER IN CHRONOLOGICAL ORDER

END

# FIG.18

START

S201
RECEIVE FIRST PERFORMANCE IDENTIFICATION NUMBER AND SECOND PERFORMANCE IDENTIFICATION NUMBER TO BE COMPARED

S202
SPECIFY FIRST SENSING FRAMES RESPECTIVELY REPRESENTING SCENES CONSTITUTING FIRST SKILL FROM SENSING DATA MEASURED DURING FIRST PERFORMANCE

S203
SPECIFY SECOND SENSING FRAMES RESPECTIVELY REPRESENTING SCENES CONSTITUTING FIRST SKILL FROM SENSING DATA MEASURED DURING SECOND PERFORMANCE

S204
ASSOCIATE FIRST SENSING FRAMES AND SECOND SENSING FRAMES WITH EACH OTHER FOR EACH OF SCENES

S205
RECEIVE VIRTUAL LINE-OF-SIGHT DATA, AND GENERATE IMAGES OF FIRST 3D MODEL AND IMAGES OF SECOND 3D MODEL SEEN FROM VIRTUAL LINE-OF-SIGHT

S206
RECEIVE INPUT OF INFORMATION ON ADDITIONAL DISPLAY LOCATIONS

S207
SPECIFY LOCATION CORRESPONDING TO ADDITIONAL DISPLAY LOCATION IN FIRST SENSING FRAME, AND DISPLAY FIRST LINE SEGMENT ON IMAGE OF FIRST 3D MODEL

S208
SPECIFY LOCATION CORRESPONDING TO ADDITIONAL DISPLAY LOCATION IN SECOND SENSING FRAME, AND DISPLAY SECOND LINE SEGMENT ON IMAGE OF SECOND 3D MODEL

S209
DISPLAY FIRST LINE SEGMENT AND SECOND LINE SEGMENT ON IMAGE OF SECOND 3D MODEL IN SUPERIMPOSED MANNER

S210
DISPLAY IMAGES OF FIRST 3D MODEL AND IMAGES OF SECOND 3D MODEL IN ASSOCIATION WITH EACH OTHER IN CHRONOLOGICAL ORDER

END

# FIG.19

```
                    ┌─────────┐
                    │  START  │
                    └─────────┘
                         │
                         ▼                              ⟨S301
┌──────────────────────────────────────────────────────────────┐
│ RECEIVE FIRST PERFORMANCE IDENTIFICATION NUMBER AND SECOND     │
│    PERFORMANCE IDENTIFICATION NUMBER TO BE COMPARED            │
└──────────────────────────────────────────────────────────────┘
                         │
                         ▼                              ⟨S302
┌──────────────────────────────────────────────────────────────┐
│ SPECIFY FIRST SENSING FRAMES RESPECTIVELY REPRESENTING         │
│ SCENES CONSTITUTING FIRST SKILL FROM SENSING DATA MEASURED     │
│              DURING FIRST PERFORMANCE                          │
└──────────────────────────────────────────────────────────────┘
                         │
                         ▼                              ⟨S303
┌──────────────────────────────────────────────────────────────┐
│ SPECIFY SECOND SENSING FRAMES RESPECTIVELY REPRESENTING        │
│ SCENES CONSTITUTING FIRST SKILL FROM SENSING DATA MEASURED     │
│              DURING SECOND PERFORMANCE                         │
└──────────────────────────────────────────────────────────────┘
                         │
                         ▼                              ⟨S304
┌──────────────────────────────────────────────────────────────┐
│ ASSOCIATE FIRST SENSING FRAMES AND SECOND SENSING FRAMES       │
│         WITH EACH OTHER FOR EACH OF SCENES                     │
└──────────────────────────────────────────────────────────────┘
                         │
                         ▼                              ⟨S305
┌──────────────────────────────────────────────────────────────┐
│ RECEIVE VIRTUAL LINE-OF-SIGHT DATA, AND GENERATE IMAGES OF     │
│ FIRST 3D MODEL AND IMAGES OF SECOND 3D MODEL SEEN FROM         │
│              VIRTUAL LINE-OF-SIGHT                             │
└──────────────────────────────────────────────────────────────┘
                         │
                         ▼                              ⟨S306
┌──────────────────────────────────────────────────────────────┐
│ DISPLAY IMAGES OF FIRST 3D MODEL AND IMAGES OF SECOND 3D       │
│ MODEL IN ASSOCIATION WITH EACH OTHER IN CHRONOLOGICAL ORDER    │
└──────────────────────────────────────────────────────────────┘
                         │
                         ▼                              ⟨S307
┌──────────────────────────────────────────────────────────────┐
│ CALCULATE NUMBER OF FRAMES BETWEEN SCENES FOR FIRST            │
│        PERFORMANCE AND SECOND PERFORMANCE                      │
└──────────────────────────────────────────────────────────────┘
                         │
                         ▼                              ⟨S308
┌──────────────────────────────────────────────────────────────┐
│ CALCULATE NUMBER OF RECTANGLES IN ACCORDANCE WITH NUMBER       │
│           OF FRAMES BETWEEN SCENES                             │
└──────────────────────────────────────────────────────────────┘
                         │
                         ▼                              ⟨S309
┌──────────────────────────────────────────────────────────────┐
│ DISPLAY FIGURE BETWEEN SCENES THAT CORRESPONDS TO NUMBER       │
│           OF RECTANGLES                                        │
└──────────────────────────────────────────────────────────────┘
                         │
                         ▼
                    ┌─────────┐
                    │   END   │
                    └─────────┘
```

# FIG.20

10

50 3D LASER SENSOR

70 SKILL RECOGNI-TION DEVICE

200 PRACTICE ASSIST DEVICE

60 CAMERA

FIG.21

EP 3 677 320 A1

# FIG.22

200

PRACTICE ASSIST DEVICE

260
CONTROL UNIT

250
STORAGE UNIT

210
INTERFACE UNIT

261
REGISTRA-TION UNIT

251
SENSING DB

262
3D MODEL GENERATION UNIT

252
SKILL RECOGNI-TION DB

220
COMMUNICATION UNIT

253
VIDEO DB

263
RECEPTION UNIT

230
INPUT UNIT

254
JOINT DEFINITION DATA

264
SPECIFYING UNIT

255
JOINT POSITION DB

240
DISPLAY UNIT

265
OUTPUT UNIT

256
3D MODEL DB

# FIG.23

START

S401
RECEIVE FIRST PERFORMANCE IDENTIFICATION NUMBER AND SECOND PERFORMANCE IDENTIFICATION NUMBER TO BE COMPARED

S402
SPECIFY FIRST SENSING FRAMES RESPECTIVELY REPRESENTING SCENES CONSTITUTING FIRST SKILL FROM SENSING DATA MEASURED DURING FIRST PERFORMANCE

S403
SPECIFY SECOND SENSING FRAMES RESPECTIVELY REPRESENTING SCENES CONSTITUTING FIRST SKILL FROM SENSING DATA MEASURED DURING SECOND PERFORMANCE

S404
ASSOCIATE FIRST SENSING FRAMES AND SECOND SENSING FRAMES WITH EACH OTHER FOR EACH OF SCENES

S405
RECEIVE VIRTUAL LINE-OF-SIGHT DATA, AND GENERATE IMAGES OF FIRST 3D MODEL AND IMAGES OF SECOND 3D MODEL SEEN FROM VIRTUAL LINE-OF-SIGHT

S406
DISPLAY IMAGES OF FIRST 3D MODEL AND IMAGES OF SECOND 3D MODEL IN ASSOCIATION WITH EACH OTHER IN CHRONOLOGICAL ORDER

S407
SPECIFY SCENE IN WHICH DIFFERENCE BETWEEN TRANSITION OF FIRST SKELETON DATA AND TRANSITION OF SECOND SKELETON DATA IS EQUAL TO OR MORE THAN THRESHOLD

S408
DISPLAY IMAGE OF 3D MODEL CORRESPONDING TO SPECIFIED SCENE IN EMPHASIZED MANNER

S409
DISPLAY TRANSITION OF FIRST SKELETON DATA AND TRANSITION OF SECOND SKELETON DATA AS GRAPH

END

# FIG.24

10a

10b

| 50 | | 70 |
|---|---|---|
| 3D LASER SENSOR | | SKILL RECOGNI-TION DEVICE |
| | | 300 |
| 60 | | PRACTICE ASSIST DEVICE |
| CAMERA | | |

# FIG.25

EP 3 677 320 A1

# FIG.26

PRACTICE ASSIST DEVICE ⌐300

CONTROL UNIT ⌐360

STORAGE UNIT ⌐350

REGISTRA-TION UNIT ⌐361

SENSING DB ⌐351

INTERFACE UNIT ⌐310

3D MODEL GENERATION UNIT ⌐362

SKILL RECOGNI-TION DB ⌐352

VIDEO DB ⌐353

COMMUNICATION UNIT ⌐320

RECEPTION UNIT ⌐363

JOINT DEFINITION DB ⌐354

INPUT UNIT ⌐330

SPECIFYING UNIT ⌐364

JOINT POSITION DB ⌐355

DISPLAY UNIT ⌐340

OUTPUT UNIT ⌐365

3D MODEL DB ⌐356

# FIG.27

START

↓

S501

RECEIVE FIRST PERFORMANCE IDENTIFICATION NUMBER AND SECOND PERFORMANCE IDENTIFICATION NUMBER TO BE COMPARED

↓

S502

SPECIFY FIRST SENSING FRAMES RESPECTIVELY REPRESENTING SCENES CONSTITUTING FIRST SKILL FROM SENSING DATA MEASURED DURING FIRST PERFORMANCE

↓

S503

SPECIFY SECOND SENSING FRAMES RESPECTIVELY REPRESENTING SCENES CONSTITUTING FIRST SKILL FROM SENSING DATA MEASURED DURING SECOND PERFORMANCE

↓

S504

ASSOCIATE FIRST SENSING FRAMES AND SECOND SENSING FRAMES WITH EACH OTHER FOR EACH OF SCENES

↓

S505

GENERATE 3D MODEL DATA ON FIRST PLAYER AND 3D MODEL DATA ON SECOND PLAYER

↓

S506

CALCULATE DIFFERENCE BETWEEN SIZE OF FIRST PLAYER AND SIZE OF SECOND PLAYER

↓

S507

CORRECT, BASED ON DIFFERENCE, SIZE OF 3D MODEL DATA CORRESPONDING TO SECOND PLAYER

↓

S508

RECEIVE VIRTUAL LINE-OF-SIGHT DATA, AND GENERATE IMAGES OF FIRST 3D MODEL AND IMAGES OF SECOND 3D MODEL SEEN FROM VIRTUAL LINE-OF-SIGHT

↓

S509

DISPLAY IMAGES OF FIRST 3D MODEL AND IMAGES OF SECOND 3D MODEL IN ASSOCIATION WITH EACH OTHER IN CHRONOLOGICAL ORDER

↓

END

# FIG.28

~400

COMPUTER

~401
CPU

~402
INPUT DEVICE

~403
DISPLAY

~404
READING DEVICE

~405
INTERFACE DEVICE

BUS
~408

~406
RAM

~406a
3D MODEL GENERATION PROCESS

~406b
RECEPTION PROCESS

~406c
SPECIFYING PROCESS

~406d
OUTPUT PROCESS

~407
HARD DISK DEVICE

~407a
3D MODEL GENERATION PROGRAM

~407b
RECEPTION PROGRAM

~407c
SPECIFYING PROGRAM

~407d
OUTPUT PROGRAM

# FIG.29

HAND SUPPORT

FLYING

ROTATING

TWISTING

TAKE OFF

1a

1b

LANDING

## INTERNATIONAL SEARCH REPORT

| International application No. |
| --- |
| PCT/JP2017/031672 |

### A. CLASSIFICATION OF SUBJECT MATTER
Int.Cl. A63B69/00(2006.01)i

According to International Patent Classification (IPC) or to both national classification and IPC

### B. FIELDS SEARCHED

Minimum documentation searched (classification system followed by classification symbols)
Int.Cl. A63B69/00

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2017 |
| Registered utility model specifications of Japan | 1996–2017 |
| Published registered utility model applications of Japan | 1994–2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2016/056449 A1 (FUJITSU LIMITED) 14 April 2016, paragraphs [0014]–[0025], [0037]–[0042], [0073]–[0092], [0116], [0125], [0126], fig. 6, 14–17 & US 2017/0189784 A1, paragraphs [0052]–[0063], [0075]–[0080], [0111]–0130], [0154], [0163], [0164], fig. 6, 14–17 & EP 3205379 A1 & KR 10-2017-0052616 A & CN 106794371 A | 1–13 |

☒ Further documents are listed in the continuation of Box C.　　☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 17.11.2017 | 28.11.2017 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2017/031672

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-229109 A (IS ENGINEERING KK) 12 August 2004, paragraphs [0012]-[0019], fig. 3, 7 (Family: none) | 1-13 |
| Y | JP 2011-120611 A (SRI SPORTS LTD.) 23 June 2011, paragraphs [0028]-[0037], [0067]-[0070], fig. 9, 10 (Family: none) | 1-13 |
| Y A | JP 2014-123322 A (CASIO COMPUTER CO., LTD.) 03 July 2014, paragraphs [0021]-[0040], [0054]-[0063], fig. 4-9 & US 2014/0177926 A1, paragraphs [0039]-[0078], [0095]-[0122], fig. 4-9 & CN 103888643 A | 4, 6-7, 11 1-3, 5, 8-10, 12-13 |
| Y A | JP 2016-63867 A (CASIO COMPUTER CO., LTD.) 28 April 2016, paragraphs [0021]-[0047], [0060]-[0068], fig. 3, 4 (Family: none) | 5, 11 1-4, 6-10, 12-13 |
| Y A | JP 2015-146980 A (SEIKO EPSON CORPORATION) 20 August 2015, paragraphs [0020]-[0028], [0042], [0064], [0080], fig. 3, 4 & US 2015/0227652 A1, paragraphs [0032]-[0041], [0056], [0082], [0103], fig. 3, 4 | 9-11 1-8, 12-13 |
| A | JP 2017-136142 A (SEIKO EPSON CORPORATION) 10 August 2017, paragraphs [0121]-[0130], [0166]-[0172], [0189]-[0203], fig. 6, 10 & US 2017/0221379 A1, paragraphs [0140]-[0149], [0185]-[0191], [0208]-[0222], fig. 6, 10 | 1-13 |
| A | US 2014/0257538 A1 (THE BOARD OF TRUSTEES OF THE LELAND STANFORD JUNIOR UNIVERSITY) 11 September 2014, paragraphs [0044]-[0052], [0058]-[0065], fig. 2A, 2B & US 2013/0029791 A1 | 1-13 |

Form PCT/ISA/210 (continuation of second sheet) (January 2015)

**EP 3 677 320 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017038407 A
- JP 2010264088 A